(19) Europäisches Patentamt
European Patent Office
Office européen des brevets

(11) **EP 4 711 160 A1**

(12) **EUROPÄISCHE PATENTANMELDUNG**

(43) Veröffentlichungstag:
**18.03.2026 Patentblatt 2026/12**

(21) Anmeldenummer: **24199827.7**

(22) Anmeldetag: **11.09.2024**

(51) Internationale Patentklassifikation (IPC):
**B60H 1/00** *(2006.01)* **B60H 1/32** *(2006.01)*

(52) Gemeinsame Patentklassifikation (CPC):
**B60H 1/00771; B60H 1/00428; B60H 1/00878;
B60H 1/3232**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **Schmitz Cargobull AG
48341 Altenberge (DE)**

(72) Erfinder:
• **Höltgen, Markus, Dr.
42781 Haan (DE)**
• **Martens, Timm
51065 Köln (DE)**
• **Ott, Mario
70825 Korntal-Münchingen (DE)**

(74) Vertreter: **Cohausz & Florack
Patent- & Rechtsanwälte
Partnerschaftsgesellschaft mbB
Bleichstraße 14
40211 Düsseldorf (DE)**

(54) **STRASSENNUTZFAHRZEUG UMFASSEND EINE TRANSPORTKÄLTEMASCHINE**

(57) Es wird ein Straßennutzfahrzeug offenbart umfassend eine Transportkältemaschine, wobei das Straßennutzfahrzeug eingerichtet ist dazu, zumindest eine Änderungsempfehlung zumindest eines Bedienerverhaltens anzuzeigen.

Fig.1

## Beschreibung

## Gebiet

Die Erfindung betrifft ein Straßennutzfahrzeug umfassend eine Transportkältemaschine, insbesondere eine Transportkältemaschine zum Temperieren, insbesondere Kühlen und/oder Heizen, eines Laderaums des Straßennutzfahrzeugs.

## Hintergrund

Eine solche Transportkältemaschine kann beispielsweise gekühlte Luft oder gewärmte Luft erzeugen, die in den Laderaum des Straßennutzfahrzeugs geblasen wird, insbesondere in dem Laderaum zirkuliert. Zu diesem Zweck kann die Transportkältemaschine zumindest ein Heizelement und/oder einen Heizkreis und/oder Kühlkreis umfassen. Der Kühlkreis kann einen durch einen elektrischen Motor angetriebenen Verdichter zum Verdichten eines Kühlmittels, einen Kondensator, eine Drosseleinrichtung und einen Wärmetauscher umfassen. In dem Kühlkreis strömt, bei einem kühlenden Betrieb, das von dem Verdichter verdichtete Kältemittel über den Kondensator und eine in Strömungsrichtung hinter dem Kondensator angeordnete Drosseleinrichtung, die beispielsweise als Stellventil ausgebildet sein kann, zu dem Wärmetauscher. In dem Wärmetauscher wird das zuvor verflüssigte Kältemittel expandiert und entzieht dabei einem getrennt von dem Kältemittel durch den Wärmetauscher geleiteten Luftstrom Wärme, so dass die Luft des Luftstroms gekühlt wird. Die gekühlte Luft dieses Luftstroms wird anschließend in den Laderaum des Straßennutzfahrzeugs (zurück-)geblasen, um diesen zu kühlen.

Eine Transportkältemaschine benötigt Energie zum Betreiben. Gleichzeitig ist das Straßennutzfahrzeug regelmäßig über ausgedehnte Zeitspannen von einer externen Energieversorgung getrennt. Somit stellt sich die Herausforderung, mit einer möglichst effizienten Versorgung der Transportkältemaschine mit Energie.

## Zusammenfassung einiger beispielhafter Ausführungsformen der Erfindung

Es wurde erkannt, dass in zukünftigen Straßennutzfahrzeugen eine intelligente und vorausschauende Planung und Steuerung der Energieversorgung einer Transportkältemaschine immer wichtiger und herausfordernder, aber dank zahllosen Datenquellen und Methoden der Datenanalyse auch erfolgversprechender wird. Doch wurde ferner erkannt, dass ein Faktor bei der datengestützten Optimierung der Energieversorgung nicht zu vernachlässigen ist und oft Quelle erheblicher Abweichungen zwischen Planung und Realität ist: Der Mensch.

Ein Bediener eines Straßennutzfahrzeugs muss vorgesehene Manöver (z.B. Anschluss eines Energiespeichers an eine Ladeinfrastruktur, Routenführung durch schattige/ sonnige Strecken, Vermeidung von Höhenmetern, rasches Verschließen von temperierten Laderäumen und/oder Kombinationen hieraus) umsetzen und Vorgehensweisen, welche den Energiebedarf der Transportkältemaschine steigern, vermeiden.

Ein Bediener ist insbesondere jegliche Person, welche einen direkten oder indirekten Einfluss auf einen Betrieb des Straßennutzfahrzeugs hat. Beispielsweise kann der Bediener ein Fahrer sein. Ein Fahrer hat z.B. einen direkten (z.B. unmittelbaren) Einfluss auf zumindest manche Aspekte des Betriebs des Straßennutzfahrzeugs, z.B. auf ein Einhalten einer Route, einen Anschluss des Straßennutzfahrzeugs an eine Ladeinfrastruktur, eine Abfahrzeit, und/oder eine Durchführung einer Pause (z.B. an einem gegebenen Ort und/oder zu einer gegebenen Zeit). Auch kann ein Fahrer einen (z.B. indirekten oder direkten) Einfluss auf ein Verhalten von Verladefachkräften, haben, welche z.B. eine Türöffnungsdauer während einer Verladung und/oder ein Temperierung einer Ladung vor Verladung. Eine Ver-/Entladekraft kann ebenfalls selbst als Bediener gefasst werden. Diese hat z.B. einen direkten Einfluss auf Türöffnungsdauern. Ein Flottenplaner, Spediteur, und/oder Disponent, kann einen Einfluss auf Fahrer und/oder Ver-/Entladekräfte haben und damit beispielsweise zumindest indirekten Einfluss auf deren Verhalten haben. Auch kann der Disponent eine Strecke auswählen und z.B. einen Setpoint für einen temperierten Laderaum wählen. Somit ist auch diese Gruppe als Bediener zu fassen.

Es wurde erkannt, dass eine notwendige Kooperation des Bedieners oft nicht ohne weiteres vorausgesetzt werden kann. Stattdessen wurde erkannt, dass Maßnahmen zur Anleitung des Bedieners ein nennenswertes Potential zur Effizienzsteigerung einer Energieversorgung von Transportkältemaschinen in sich tragen. Es wurde erkannt, dass Bediener insbesondere in der Logistikbranche trainiert darauf sind, die von ihnen zumindest mittelbar gesteuerten Fahrzeuge zu überwachen und angezeigte Informationen (z.B. über Anzeigen in einem von einem Fahrer gesteuerten Fahrzeug) zu berücksichtigen und verlässlich (z.B. reproduzierbar) umzusetzen.

Es ist daher eine der Aufgaben der Erfindung, eine Energieversorgungsoptimierung einer Transportkältemaschine bereitzustellen, welche negative Einflüsse durch schädliches Bedienerverhalten minimiert.

Gemäß einem ersten beispielhaften Aspekt wird ein Straßennutzfahrzeug vorgeschlagen umfassend eine Transportkältemaschine, wobei das Straßennutzfahrzeug dazu eingerichtet ist,

- einen Energiebedarf der Transportkältemaschine für zumindest eine erste zu befahrende Strecke zu prognostizieren, wobei der prognostizierte Energiebedarf zumindest teilweise auf zumindest einem angenommenen Bedienerverhalten basiert,

- einen tatsächlichen Energiebedarf der Transportkältemaschine für die zumindest eine erste zu befahrende Strecke zu bestimmen (z.B. nach oder während eines Befahrens der zumindest einen ersten zu befahrenden Strecke),
- zumindest ein tatsächliches Bedienerverhalten für die zumindest eine erste zu befahrende Strecke zu bestimmen (z.B. nach oder während eines Befahrens der zumindest einen ersten zu befahrenden Strecke),
- basierend auf einer Energiebedarfsabweichung zwischen dem prognostizierten Energiebedarf und dem tatsächlichen Energiebedarf und auf zumindest einer Bedienerverhaltensabweichung zwischen zumindest einem angenommenem Bedienerverhalten und zumindest einem tatsächlichen Bedienerverhalten eine Änderungsempfehlung zumindest eines Bedienerverhalten zu bestimmen, und
- einem Bediener die Änderungsempfehlung bei oder vor Befahren einer zweiten zu befahrenden Strecke anzuzeigen.

Das offenbarte Straßennutzfahrzeug ist zum Beispiel ein Lastkraftwagen, ein Anhänger oder ein Sattelauflieger. Straßennutzfahrzeuge sind insbesondere für den Transport von Gütern, vorzugsweise Stückgütern, im öffentlichen Straßenverkehr vorgesehen. Das Straßennutzfahrzeug ist insbesondere ein bereiftes Straßennutzfahrzeug, welche auf mit Gas gefüllten Reifen fährt. Zu diesem Zweck weisen die Straßennutzfahrzeuge unterschiedliche Arten von Nutzfahrzeugaufbauten auf, welche der Aufnahme der zu transportierenden Güter in einem Innenraum, insbesondere einem Laderaum, dienen. So sind beispielsweise Kofferaufbauten mit festen Seitenwänden und einem festen Dach bekannt, welche den Innenraum umschließen. Da die Kofferaufbauten geschlossen sind, sind Kofferaufbauten in besonderem Maße für den Transport von temperaturempfindlichen Gütern, also beispielsweise für den sogenannten Kühltransport geeignet. Damit die Temperatur solcher temperaturempfindlichen Güter einen von den Gütern abhängigen Grenzwert während eines solchen Kühltransports nicht übersteigt, wird der Innenraum (Laderaum) des Straßennutzfahrzeugs gekühlt.

Wenn hier, im Folgenden und/oder Vorangehenden offenbart wird, dass das Straßennutzfahrzeug etwas tut, z.B. Verfahrensschritte ausführt, ist damit insbesondere gemeint, dass eine zu dem Straßennutzfahrzeug gehörige Steuervorrichtung, z.B. eine Telematikeinheit und/oder eine Steuereinheit der Transportkältemaschine, die entsprechenden Schritte steuert und/oder ausführt.

Das offenbarte Straßennutzfahrzeug umfasst ferner eine Transportkältemaschine.

Die Transportkältemaschine kann Teil des Straßennutzfahrzeugs sein, z.B. in und/oder an einem Kofferaufbau des Straßennutzfahrzeugs montiert sein.

Die Transportkältemaschine ist insbesondere zum Temperieren, also Kühlen und/oder Heizen eines Innenraums, beispielsweise des Laderaums, des Straßennutzfahrzeugs vorgesehen und/oder eingerichtet und/oder konfiguriert. Zu diesem Zweck kann die Transportkältemaschine einen Kühlkreis umfassend einen Verdichter (z.B. Kompressor) zum Verdichten eines Kühlmittels, einen Kondensator, eine Drosseleinrichtung und einen Wärmetauscher (Verdampfer) umfassen. Zum Beispiel kann das Kühlen des Innenraums, insbesondere des Laderaums, des Straßennutzfahrzeugs durch die Transportkältemaschine erfolgen, indem die Transportkältemaschine Luft des Laderaums ansaugt, durch den Wärmetauscher (Verdampfer) leitet und dort Wärme entzieht und anschließend die Luft in den Laderaum Straßennutzfahrzeugs (zurück-)bläst. Auch kann (beispielsweise im Bereich des Wärmetauschers) zumindest ein Heizelement angeordnet sein. Hierdurch kann die Transportkältemaschine der angesaugten Luft auch Wärme hinzufügen, diese also aufwärmen.

Das Straßennutzfahrzeug ist eingerichtet, einen Energiebedarf der Transportkältemaschine für zumindest eine erste zu befahrende Strecke zu prognostizieren.

Beispielsweise kann die Prognose basieren auf einem Startpunkt (z.B. einer aktuellen Position des Straßennutzfahrzeugs) und einem Endpunkt (z.B. einem Ziel zumindest einer mittels des Straßennutzfahrzeugs transportierter Ware). Ferner kann die Prognose zumindest einen Zwischenstopp einbeziehen, z.B. basierend auf (z.B. gesetzlich vorgeschriebenen) Pausenzeiten zumindest eines Fahrers des Straßennutzfahrzeugs und/oder basierend auf Energiebezugsnotwendigkeiten (z.B. Tankstellenstopp und/oder Aufladestopp).

Die Prognose des Energiebedarfs kann beispielsweise auf einer optimierten Routenführung basieren. Eine Route kann z.B. basierend auf Kartenmaterial bestimmt werden, z.B. nach einem Dijkstra Algorithmus.

Eine Energiebedarfsprognose kann z.B. basierend auf einer Länge einer ersten Strecke, einem Höhenprofil, einer Temperatur, einer Tageszeit, einer Klimazone, einer Vegetation, Bebauung und/oder Kombinationen hieraus bestimmt werden. Z.B. kann eine Temperatur eines Laderaums (z.B. eingestellte Set-Temperatur), ein Wärmeübertragungskoeffizient des Laderaums zur Umgebung und eine (z.B. gemittelte, z.B. prognostizierte) Außentemperatur und/oder Sonneneinstrahlung herangezogen werden, um eine von einer Transportkältemaschine einzubringende und/oder abzuführende Wärme für zumindest eine erste zu befahrende Strecke und damit einen Energiebedarf zu bestimmen.

Die zumindest eine erste Strecke kann eine einzelne erste Strecke oder auch zumindest 2, 3, 4, 5, 10, 20, 50, 100, 200, 500 oder 1000 erste Strecken umfassen.

Beispielsweise kann die zumindest eine erste Strecke eine Teilstrecke einer Strecke entsprechen. Beispielsweise kann das Verfahren gemäß dem ersten Aspekt kontinuierlich (z.B. periodisch, z.B. zumindest alle 1s, 2s, 5s, 10s, 30s, 1min, 2min, 5min, 10min, 15min, 20min, 30min, 45min, 1h und/oder nach jeweils zumindest 100m, 200m, 500m, 1000m, 2000m, 5000m, 10km) während eines Befahrens einer Gesamtstrecke durchgeführt werden, von der die zumindest eine erste Strecke jeweils einem bereits befahrenen Abschnitt der Gesamtstrecke (z.B. ab einem Startpunkt bis zu einer aktuellen Position des Straßnnutzfahrzeugs) entspricht.

Der prognostizierte Energiebedarf basiert zumindest teilweise auf zumindest einem angenommenen Bedienerverhalten,

Ein angenommenes Bedienerverhalten betrifft insbesondere eine Bedienung des Straßennutzfahrzeugs durch einen Bediener. Der Bediener (z.B. Fahrer) kann das Nutzfahrzeug beispielsweise schnell oder langsam bewegen, der Bediener (z.B. Fahrer und/oder Lagerarbeiter) kann Türen zu temperierten Laderäumen betätigen (z.B. öffnen und/oder schließen), Bediener (z.B. Fahrer) kann das Straßennutzfahrzeug mit einem Energieversorgungsnetz verbinden und/oder tanken, Bediener (z.B. Fahrer und/oder Disponent) kann einen Setpoint (z.B. Solltemperatur) einstellen, Bediener (z.B. Fahrer) kann das Fahrzeug entlang einer vorgegebenen Route führen oder davon abweichen, Stopps wie vorgegeben durchführen oder abweichende Orte zum verweilen auswählen und/oder Stopps auslassen und/oder Kombinationen hieraus.

Ein angenommenes Bedienerverhalten kann beispielsweise einem optimalen Bedienerverhalten entsprechen (z.B. Anschluss des Straßennutzfahrzeugs an alle Lademöglichkeiten, minimale Türöffnungszeiten, exakte Einhaltung einer vorgegebenen Route und/oder Abfahrtzeiten und/oder Pausenzeiten, und/oder Kombinationen hieraus). Ein angenommenes Bedienerverhalten kann alternativ oder zusätzlich ein durchschnittliches Bedienerverhalten sein, z.B. ein Durchschnitt über Bedienerverhalten von mehreren, voneinander verschiedenen Bedienern, z.B. über (z.B. jeweils) mehrere, z.B. zumindest 2, 3, 4, 5, 10, 15, 20, 30, 40, 50, 100 oder mehr Fahrten und/oder Strecken.

Es wurde erkannt, dass das Bedienerverhalten einen nicht unwesentlichen Einfluss auf den Energiebedarf der Transportkältemaschine aufweist und es deshalb vorteilhaft ist, dieses bei der Prognose eines Energiebedarfs mit einzubeziehen.

Das Straßennutzfahrzeug ist damit dazu eingerichtet, eine automatisierte und gezielte Korrektur von Bedienerverhalten zu erwirken und damit die Effizienz einer Fahrzeugflotte zu steigern.

Das Straßennutzfahrzeug ist ferner dazu eingerichtet, einen tatsächlichen Energiebedarf der Transportkältemaschine für die zumindest eine erste zu befahrende Strecke zu bestimmen.

Beispielsweise kann der tatsächliche Energiebedarf während des Befahrens der zumindest einen ersten Strecke bestimmt werden, beispielsweise für die gesamte zumindest eine erste Strecke und/oder für zumindest eine Teilstrecke und/oder für zumindest ein Fahrmanöver während des Befahrens der zumindest einen ersten Strecke. Auch kann beispielsweise der tatsächliche Energiebedarf nach dem Befahren der zumindest einen ersten zu befahrenden Strecke bestimmt werden.

Die Bestimmung des tatsächlichen Energiebedarfs kann beispielsweise durch eine kontinuierliche Messung einer Leistungsaufnahme der Transportkältemaschine vorgenommen werden und/oder durch eine Vorher-Nachher-Messung von verfügbarer (Rest-)Energie. Beispielsweise kann unter anderem eine Messung eines (aufgenommenen) elektrischen Stroms, ein Ladezustand einer Energiespeichers, ein Füllstand eines Tanks und/oder Kombinationen hieraus vorgenommen werden, um den tatsächlichen Energiebedarf zu bestimmen. Beispielsweise kann die Bestimmung mittels entsprechender Sensoren, z.B. zumindest einem Stromsensor, zumindest einem Spannungssensor (z.B. eines Batteriemanagement-Schaltkreises) und/oder zumindest einem Füllstandsensor (z.B. eines Tanks) durchgeführt werden.

Das Straßennutzfahrzeug ist ferner dazu eingerichtet, zumindest ein tatsächliches Bedienerverhalten für die zumindest eine erste zu befahrende Strecke zu bestimmen.

Beispielsweise kann das zumindest eine tatsächliche Bedienerverhalten während des Befahrens der zumindest einen ersten Strecke bestimmt werden, beispielsweise durch einen oder mehrere entsprechende Sensoren. Beispielsweise kann das Straßennutzfahrzeug hierfür zumindest einen Positionssensor (z.B. satellitenbasiert, z.B. basierend auf GPS, GLONASS, und/oder GALILEO), einen Ladezustandssensor, einen Stromzähler (z.B. für eine Ladevorrichtung), einen Füllstandsensor, einen Türöffnungssensor, und/oder Kombinationen hieraus aufweisen. Sensorsignale von einem oder mehreren entsprechenden Sensoren können durch das Straßennutzfahrzeug und/oder eine damit verbundene Auswertungseinrichtung ausgewertet werden, beispielsweise kann ausgehend von einem Positionssensor eine Dauer und eine Position eines Stopps (z.B. Stillstandsphase), eine Abweichung von einer vorgesehenen Route, oder eine Geschwindigkeit bestimmt werden.

Bedienerverhalten können personenspezifisch oder personenunspezifisch bestimmt werden. Beispielsweise kann das Straßennutzfahrzeug agnostisch gegenüber einem (z.B. aktuellen) Bediener (z.B. Fahrer) (z.B. für verschiedene Bediener (z.B. Fahrer) gemischt und/oder ohne zwischen einzelnen Bedienern (z.B. Fahrern) zu differenzieren) Fahrerverhalten annehmen und/oder ein jeweiliges tatsächliches Bedienerverhalten (z.B. Fahrerverhalten) bestimmen.

Auch kann alternativ oder zusätzlich das Straßennutzfahrzeug eingerichtet sein, (angenommene und/oder tatsächliche) Bedienerverhalten (z.B. Fahrerverhalten) einem jeweiligen Bediener (z.B. Fahrer) zuzuordnen. Beispielsweise kann hierfür ein Identifizierungsmittel vorgesehen sein, insbesondere ein Chipkartenleser, ein biometrischer Sensor (z.B. Fingerabdrucksensor und/oder Kamera) und/oder eine Informationsquelle, welche eine Zuordnung zwischen Fahrzeiten und/oder der zumindest eine erste Strecke zu einem jeweiligen Bediener (z.B. Fahrer) ermöglicht.

Das Straßennutzfahrzeug ist ferner dazu eingerichtet, eine Änderungsempfehlung zumindest eines Bedienerverhalten zu bestimmen.

Das Bestimmen der Änderungsempfehlung basiert auf einer Energiebedarfsabweichung zwischen dem prognostizierten Energiebedarf und dem tatsächlichen Energiebedarf. Beispielsweise kann detektiert werden, dass ein tatsächlicher Energiebedarf von einem prognostizierten Energiebedarf abweicht, beispielsweise in signifikanter Art und Weise, beispielsweise mit einem Signifikanzniveau von $p=0,1\%$, $p=0,05\%$, oder $p=0,01\%$. Beispielsweise kann eine Änderungsempfehlung für Energiebedarfsabweichung relativ zum prognostizierten Energiebedarf von zumindest 5%, 10%, 15%, 20%, 30% oder 40% ausgegeben werden. Eine Änderungsempfehlung kann beispielsweise indikativ für die Energiebedarfsabweichung sein und diese beispielsweise angeben und/oder abhängig von der Energiebedarfsabweichung verschiedene Formen annehmen.

Zusätzlich basiert die Änderungsempfehlung auf zumindest einer Bedienerverhaltensabweichung zwischen zumindest einem angenommenem Bedienerverhalten und zumindest einem tatsächlichen Bedienerverhalten. Beispielsweise kann die Art einer Änderungsempfehlung mit einer Bedienerverhaltensabweichung korrespondieren. Beispielsweise kann eine Änderungsempfehlung derart gestaltet sein, dass sie einer Bedienerverhaltensabweichung (z.B. bei einer zweiten zu befahrenden Strecke) entgegenwirkt (z.B. falls sie von einem Bediener befolgt wird).

Eine Änderungsempfehlung kann beispielsweise in Kombination auf einer Energiebedarfsabweichung und einer Bedienerverhaltensabweichung basieren, z.B. derart, dass ermittelt wird, welche Bedienerverhaltensabweichung zu einer Energiebedarfsabweichung geführt hat und/oder geführt haben könnte und die Änderungsempfehlung dazu eingerichtet ist, zu empfehlen, das Bedienerverhalten derart zu ändern, dass die Bedienerverhaltensabweichung (z.B. in zukünftigen Fahrten) abgemildert und/oder vermieden wird. Beispielsweise kann hierfür zumindest eine Korrelation zwischen Energiebedarfsabweichung und zumindest einer (oder mehreren jeweiligen) Bedienerverhaltensabweichung bestimmt werden, beispielsweise basierend auf einer Vielzahl von zumindest ersten Strecken. Beispielsweise kann für mehrere Bedienerverhaltensabweichung ein jeweiliger Hypothesentest durchgeführt werden, ob die Bedienerverhaltensabweichung (z.B. zu einem signifikanten Maße) mit der Energiebedarfsabweichung korreliert. Falls eine (z.B. signifikante) Korrelation vorliegt, kann das jeweilige Bedienerverhalten für eine Änderungsempfehlung ausgewählt werden. Ein Signifikanzniveau kann z.B. $p=0,1\%$, $p=0,05\%$, oder $p=0,01\%$ betragen.

Eine Änderungsempfehlung kann beispielsweise spezifisch für eine (und/oder den jeweiligen) (z.B. zumindest eine erste zurückzulegende) Strecke sein und/oder unabhängig von der jeweiligen (und/oder den jeweiligen)(z.B. zumindest eine erste zurückzulegende) Strecke sein, Alternativ oder zusätzlich kann eine Änderungsempfehlung beispielsweise spezifisch für einen jeweiligen Bediener sein und/oder unabhängig von dem und/oder unspezifisch für den jeweiligen Bediener sein.

Eine Änderungsempfehlung kann beispielsweise eine Empfehlung umfassen, zumindest ein Bedienerverhalten anzupassen. Beispielsweise kann eine Änderungsempfehlung eine empfohlene Abweichung von einem (z.B. tatsächlichen, z.B. vergangenen Bedienerverhalten) angeben und/oder eine empfohlene Einhaltung eines Bedienerverhaltens.

Das Straßennutzfahrzeug ist ferner eingerichtet, einem Bediener die Änderungsempfehlung, z.B. bei oder vor Befahren einer zweiten zu befahrenden Strecke, anzuzeigen.

Beispielsweise kann die zweite zu befahrende Strecke einem Rest einer Gesamtstrecke entsprechen, von welcher die zumindest eine erste zu befahrende Strecke einen bereits befahrenen Abschnitt kennzeichnet und die zweite zu befahrende Strecke einen zu befahrenden Rest.

Wenn eine Änderungsempfehlung einem Bediener angezeigt wird, ist hiermit beispielsweise gemeint, dass die Änderungsempfehlung für den jeweiligen Bediener wahrnehmbar ist, insbesondere visuell, akustisch, haptisch und/oder Kombinationen hieraus. Beispielsweise kann die Änderungsempfehlung im Gesichtsfeld des Bedieners angezeigt werden, z.B. auf einem Monitor, welcher sich üblicherweise im Gesichtsfeld des Bedieners befindet. Beispielsweise kann die Änderungsempfehlung akustisch angezeigt werden, z.B. über zumindest einen Lautsprecher, welcher üblicherweise vom Bediener wahrgenommen wird. Auch kann die Änderungsempfehlung haptisch angezeigt werden, beispielsweise durch eine Vibration eines (Bedien-)Elements, mit welchem der Bediener typischerweise in mechanischem Kontakt ist (z.B. Lenkrad und/oder Sitz und/oder anderweitiges Bedienelement). Üblicherweise kann hierbei beispielsweise meinen, dass in einem ordnungsgemäßen Ausüben der jeweiligen (z.B. beruflichen) Tätigkeit mindeste Wahrscheinlichkeit (z.B. zumindest 70%, 80%, 90%, 95%, 96%, 97%, 98%, 99%) einer Wahrnehmung der jeweiligen Änderungsempfehlung gegeben ist. Gemeinsam mit einer verlässlichen Umsetzung der jeweiligen Änderungsempfehlung durch einen jeweils hierauf trainierten Bediener wird der technische Effekt einer Effizienzsteigerung des Straßennutzfahrzeugs durch die Anzeige der Änderungsempfehlung erreicht.

Der Bediener, welchem eine Änderungsempfehlung angezeigt wird, kann identisch zu dem Bediener sein, welcher ein angenommenes und/oder tatsächliches Fahrerverhalten ausführt. Alternativ oder zusätzlich kann der Bediener, welchem eine Änderungsempfehlung angezeigt wird, verschieden von dem Bediener sein, welcher ein angenommenes und/oder tatsächliches Fahrerverhalten ausführt.

Wenn eine Änderungsempfehlung z.B. einem Fahrer angezeigt wird, ist hiermit beispielsweise gemeint, dass die Änderungsempfehlung in einem Bereich des Straßennutzfahrzeugs angezeigt wird, in welchem sie ein Fahrer zumindest sehen, hören oder spüren kann, beispielsweise im Cockpit und/oder an der Transportkältemaschine.

Eine Änderungsempfehlung an einen Disponenten kann z.B. auf einem Computerbildschirm, z.B. in einer entsprechenden Anwendung (z.B. Telematik-System zur Planung und/oder Fernüberwachung), angezeigt werden oder in einem Büro (z.B. über einen Computer) akustisch oder haptisch ausgegeben werden.

Eine Änderungsempfehlung an einen Lagerarbeiter (z.B. Be-/Entlader) oder Betreiber eines Lagers kann z.B. wie beim Disponenten angezeigt werden. Auch kann beispielsweise das Straßennutzfahrzeug eine Anzeige (visuell, akustisch und/oder haptisch) in einem Bereich zumindest einer Tür aufweisen, welche die Änderungsempfehlung anzeigt.

Die Änderungsempfehlung kann einem Bediener, welcher unmittelbar für eine durch die Änderungsempfehlung empfohlene Verhaltensänderung betroffen ist und/oder welcher für eine Bedienerverhaltensabweichung verantwortlich ist (z.B. Fahrer bei Einhaltung Route) angezeigt werden. Auch kann die Änderungsempfehlung einem Bediener, welcher nicht (z.B. nicht unmittelbar) für eine durch die Änderungsempfehlung empfohlene Verhaltensänderung betroffen ist und/oder welcher nicht (z.B. nicht unmittelbar) für eine Bedienerverhaltensabweichung verantwortlich ist (z.B. Disponent bei Einhaltung Route) angezeigt werden. Auch letztere Bediener können eine Änderungsempfehlung umsetzen, z.B. durch Anpassungen von Routen oder Temperatur-Setpoints oder auch von Optimierungszielen. Auch können Disponenten Änderungsempfehlungen umsetzen durch Einflussnahme auf zumindest einen oder mehrere Bediener, welche unmittelbaren Einfluss auf das Bedienerverhalten haben, durch Auswahl von unmittelbaren Bedienern, durch Auslösung von Anzeigen beim unmittelbaren Bediener und/oder Kombinationen hieraus.

Die Änderungsempfehlung kann beispielsweise angezeigt werden als ein visueller, beispielsweise farblicher, textueller, piktographischer und/oder bildlicher Hinweis. Auch kann eine Änderungsempfehlung akustisch angezeigt werden und/oder haptisch.

Das Anzeigen kann beispielsweise auf einem Anzeigeelement des Straßennutzfahrzeugs erfolgen. Beispielsweise kann das Straßennutzfahrzeug zumindest einen Bildschirm und/oder Lautsprecher umfassen, beispielsweise als Teil der Transportkältemaschine und/oder im Bereich eines Armaturenbretts des Straßennutzfahrzeugs (z.B. ein Infotainment System und/oder Navigationssystem des Fahrzeugs). Hier kann beispielsweise die Änderungsempfehlung angezeigt werden.

Das Anzeigen kann hierbei beispielsweise verstanden werden als ein mittelbares Anzeigen, z.B. umfassend eine Übermittlung (z.B. einer Indikation) der Änderungsempfehlung an eine Anzeigevorrichtung und/oder an eine weitere Einrichtung, welche ihrerseits dazu eingerichtet ist, die Änderungsempfehlung anzuzeigen, beispielsweise durch Anzeigen und/oder durch Weiterleiten der Änderungsempfehlung an eine Anzeigeeinrichtung. Beispielsweise kann somit das Straßennutzfahrzeug (z.B. ein Trailer) dazu eingerichtet sein, eine Änderungsempfehlung dadurch anzuzeigen, dass es einer weiteren Einrichtung die (z.B. Indikation der) Änderungsempfehlung zu übermittelt. Die weitere Einrichtung kann beispielsweise einem weiteren Fahrzeug (z.B. Zugmaschine) entsprechen, welchem das Straßennutzfahrzeug z.B. über einen CAN-Bus die Änderungsempfehlung übermittelt. Alternativ oder zusätzlich kann das Straßennutzfahrzeug eingerichtet sein, die Änderungsempfehlung an einen Computer, z.B. einen Server, beispielsweise einen fernliegenden (z.B. remote) und/oder stationären Server, zu übermitteln, beispielsweise als Telematikdaten, beispielsweise mittels einer Telematikeinrichtung des Straßennutzfahrzeugs. Das Anzeigen der Änderungsempfehlung kann beispielsweise auf einem Gerät des Bedieners, beispielsweise einem Mobiltelefon, Tablet und/oder Kombinationen hieraus, erfolgen.

Ein Anzeigen kann beispielsweise spezifisch für ein (z.B. zu beeinflussendes) Bedienerverhalten sein. Insbesondere kann eine Zeit und/oder ein Ort eines Anzeigens an das Bedienerverhalten angepasst sein. Z.B. kann ein Anzeigen einer Änderungsempfehlung eines Fahrerverhaltens eines Einhaltens einer Route erst bei Abweichen von der vorgegebenen Route ausgegeben werden, z.B. in Form einer der obigen (z.B. visuellen, akustisch und/oder haptischen Formen). Beispielsweise kann das Anzeigen der Änderungsempfehlung zusätzlich von vorherigen Bedienerverhaltensabweichungen dieser Art (Abweichen von Route) abhängen. Beispielsweise kann ähnlich hierzu ein Anzeigen einer Änderungsempfehlung bezüglich eines Anschlusses an einer Energieversorgungsinfrastruktur erst in der Nähe einer entsprechenden Anschlussmöglichkeit (z.B. auf einem Rastplatz) angezeigt werden, z.B. zusätzlich abhängig von einer entsprechenden Fahrerverhaltensabweichung (als z.B. nur, wenn ein Anschließen in Vergangenheit unzuverlässig durchgeführt wurde). Ähnliches gilt für Änderungsempfehlungen bezüglich der restlichen Bedienerverhalten. Das Anzeigen kann jeweils automatisiert an das jeweilige Bedienerverhalten angepasst sein, z.B. basieren auf Sensordaten, insbesondere von anmeldungsgemäß offenbarten Sensoren, insbesondere von zumindest einem Positionsbestimmungsmittel, zumindest einem Strom-/Spannungssensoren, zumindest einem Temperatursensor und/oder Kombinationen hieraus.

Bediener von Straßennutzfahrzeugen sind Fachkräfte, welche daran gewöhnt und darauf trainiert sind, auf Hinweise bezüglich der von ihnen gesteuerten Geräte (z.B. ihres Fahrzeugs) reproduzierbar zu reagieren und diese umzusetzen. Die Anzeige der Änderungsempfehlung erzielt somit den technischen Effekt einer Anpassung des Bedienerverhaltens und damit einer Effizienzsteigerung der Transportkältemaschine des Straßennutzfahrzeugs.

Gemäß einem Ausführungsbeispiel des ersten beispielhaften Aspekts wird vorgeschlagen, dass der Energiebedarf prognostiziert wird basierend auf vergangenen tatsächlichen Energiebedarfen und/oder Energiebedarfsabweichungen und/oder vergangenen tatsächlichen Bedienerverhalten und/oder Bedienerverhaltensabweichungen (z.B. über eine Mehrzahl von Strecken, z.B. bedienerspezifisch oder bedienerunspezifisch, z.B. streckenspezifisch oder streckenunspezifisch).

Beispielsweise kann das Verfahren iterativ aus den Abweichungen zwischen Prognose und/oder Annahme und tatsächlichen Resultaten lernen und damit seine Genauigkeit steigern.

Gemäß einem Ausführungsbeispiel des ersten beispielhaften Aspekts wird vorgeschlagen, dass das Straßennutzfahrzeug ferner dazu eingerichtet ist, das Prognostizieren eines Energiebedarfs der Transportkältemaschine, das Bestimmen eines tatsächlichen Energiebedarfs der Transportkältemaschine und das Bestimmen zumindest eines tatsächlichen Bedienerverhaltens zumindest einmal zu wiederholen, wobei insbesondere ferner das Bestimmen der Änderungsempfehlung basiert auf einer Mehrzahl von durch die zumindest eine Wiederholung resultierenden Energiebedarfsabweichungen und/oder Bedienerverhaltensabweichungen. Die Wiederholung kann zum Beispiel für eine jeweilige einer Vielzahl von ersten Strecken durchgeführt werden.

Beispielsweise können die ersten Strecken zumindest ohne Anzeigen einer Änderungsempfehlung befahren werden. Das Straßennutzfahrzeug kann beispielsweise dazu eingerichtet sein, (z.B. erst) nach einer (z.B. Mehrzahl von) befahrenen ersten Strecken eine Änderungsempfehlung anzuzeigen.

Beispielsweise kann auch zumindest beim oder vor dem Befahren einer ersten Strecke eine Änderungsempfehlung angezeigt werden und/oder worden sein. Beispielsweise kann eine Effektivität von einer Änderungsempfehlung basierend auf zumindest einer Bedienerverhaltensänderung von einer oder mehreren ersten Fahrten ohne Anzeige einer Änderungsempfehlung zu einer oder mehreren (z.B. ersten oder zweiten) Fahrten mit Anzeige einer Änderungsempfehlung eine Effektivität einer Anzeige einer Änderungsempfehlung bestimmt werden. Die Effektivität kann bedienerunspezifisch oder bedienerspezifisch bestimmt werden.

Beispielsweise kann für ineffektive Änderungsempfehlungen und/oder Bedienerverhalten, welche sich als durch die Änderungsempfehlung (z.B. zu) gering beeinflusst erweisen, und/oder für Bediener, bei denen eine geringe Effektivität festgestellt wird, eine Anzeigeintensität einer oder der Änderungsempfehlung für zumindest eine künftige (z.B. zweite oder dritte) zu befahrende Strecke erhöht werden. Beispielsweise kann hierzu eine Anzeigemodalität gewechselt werden (z.B. von visuell zu akustisch und/oder haptisch) und/oder Anzeigemodalitäten hinzugenommen werden (z.B. visuell und akustisch und/oder haptisch). Beispielsweise kann eine erhöhte Anzeigeintensität mit farblicher Hervorhebung und/oder Animierung von visuellen Elementen erreicht werden.

Durch wiederholtes Prognostizieren und Vergleichen mit den tatsächlichen Gegebenheiten können besonders viele Daten gewonnen werden. Beispielsweise kann hierdurch mit besonders hoher Verlässlichkeit eine zielführende Änderungsempfehlung bestimmt werden.

Gemäß einem Ausführungsbeispiel des ersten beispielhaften Aspekts wird vorgeschlagen, dass der Energiebedarf prognostiziert wird basierend auf einer Prognose eines Energieverbrauchs und einer Prognose einer Energiegewinnung.

Es ist erkannt worden, dass heutige Transportkältemaschinen nicht nur Energie verbrauchen (also für eine Temperierung eines Innenraums, insbesondere Laderaums des Straßennutzfahrzeugs aufwenden). Stattdessen können heutige Transportkältemaschinen und/oder Straßennutzfahrzeuge auch in Verbindung mit Energiegewinnungseinrichtungen betrieben werden, z.B. ein oder mehrere Solarmodule und/oder Rekuperationsvorrichtungen (z.B. hierfür vorgesehenen Generatorachsen und/oder Rekuperationsbremsen). Auch können Transportkältemaschinen und/oder Straßennutzfahrzeuge an ein Energieversorgungsnetz (z.B. eine Ladestation) angeschlossen werden und hierdurch Energie aufnehmen. Beispielsweise kann die Energie in einem Energiespeicher der Transportkältemaschine und/oder des Straßennutzfahrzeuges gespeichert werden.

Der prognostizierte Energiebedarf kann somit als eine Differenz aus Energieverbrauch und Energiegewinnung bestimmt werden. Alternativ kann der Energiebedarf (z.B. nur) den Energieverbrauch betreffen und/oder den Energieverbrauch abzüglich Energiegewinnung aus einem Solarmodul und/oder einer Rekuperationvorrichtung. Ein Energiebedarf kann somit beispielsweise eine Notwendigkeit angeben, während und/oder vor der zumindest einen ersten Strecke einen Speicher, z.B. einen Kraftstoffspeicher und/oder einen elektrischen Energiespeicher, zu leeren und/oder zu befüllen.

Beispielsweise kann durch Bedienerverhalten (z.B. Fahrt auf ebenem Terrain, Fahrt durch sonnige Bereiche, Abstellen derart, dass Sonnenlicht auf das Solarmodul fällt, Anschließen des Straßennutzfahrzeugs an eine Ladeinfrastruktur, Vorkühlen einer Ladung des Straßennutzfahrzeugs in einem Netzbetrieb der Transportkältemaschine, Aufladung eines Energiespeichers (z.B. der Transportkältemaschine und/oder des Straßennutzfahrzeugs) (z.B. vor Fahrtantritt), zügiges Schließen von Türen zum temperierten Laderaum und/oder Kombinationen hieraus) der Energiebedarf für eine gegebene zumindest eine erste Strecke gesenkt werden und/oder bei gegenteiligem Bedienerverhalten erhöht werden. Beispielsweise kann dies durch Erhöhung der Energiegewinnung und/oder durch Senkung des Energieverbrauchs geschehen.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf Nutzerdaten, wobei die Nutzerdaten insbesondere zumindest eines der Folgenden umfassen:

- Routeninformationen zu der zumindest einen ersten zu befahrenden Strecke, insbesondere Informationen zu einem Startpunkt und/oder einem Endpunkt, Informationen zu zumindest einem Koordinatenverlauf der zumindest einen ersten zu befahrenden Strecke (z.B. in Form von Längen- und/oder Breitengrad und/oder Höheninformationen, beispielsweise Reliefenergie und/oder Höhenmeter der zurückzulegenden Strecke),
- zumindest einem Zwischenstopp (z.B. mit oder ohne Türöffnung, z.B. Fahrpause oder Ent-/Verladestopp auf der zumindest einen ersten zu befahrenden Strecke,
- zumindest einem Temperatur-Setpoint, insbesondere einer zulässigen Abweichungen von dem Temperatur-Setpoint,
- zumindest einer Art und/oder einem Wert einer zu transportierenden Ware, und/oder
- zumindest einem Optimierungsziel (z.B. einer Routenplanung und/oder einer Steuerung der Transportkältemaschine), insbesondere eines von Energie-Effizienz, CO2-Einsparung, Wirtschaftlichkeit, Laufzeit, Temperaturführung, und/oder Bauteilverschleiß.

Nutzerdaten können insbesondere Daten sein, welche ein Nutzer, insbesondere ein ein Bediener, z.B. ein Disponent (z.B. Flotten-Manager und/oder Planer) eines Logistikbetriebs, welches sich des anmeldungsgemäßen Straßennutzfahrzeugs bedient, bereitstellt.

Der Bediener kann vorgaben zum Betrieb des Straßennutzfahrzeugs und/oder der Transportkältemaschine machen. Beispielsweise kann der Bediener bestimmen, welche Route eingeschlagen werden soll, welche Zwischenstopps zu tätigen sind und welche Temperaturen im Laderaum des Straßennutzfahrzeugs herrschen sollen (z.B. und mit welcher Toleranz).

Insbesondere eine Änderung der Ladung des Straßentransportfahrzeugs (z.B. Beladung und/oder Entladung) kann einen Einfluss auf den Energiebedarf der Transportkältemaschine haben. Beispielsweise kann für die Be-/Entladung eine Öffnung der Laderaums des Straßennutzfahrzeugs notwendig sein, wodurch nicht temperierte Luft in den Laderaum eindringen kann. Auch kann beispielsweise ein erhöhtes Leervolumen entstehen, eine Unterteilung des Straßennutzfahrzeugs aufgehoben oder eingerichtet werden (z.B. falls zwei oder mehr verschieden zu temperierten Waren transportiert wurden oder werden) und/oder es können Waren aufgenommen werden, welche zunächst auf eine jeweilige Zieltemperatur temperiert werden müssen.

Ferner kann die Art einer Be- und/oder Entladung, insbesondere deren Dauer (z.B. einer Türöffnung) und/oder eine Verfügbarkeit einer externen Energiequelle während des Vorgangs, einen Energiebedarf der Transportkältemaschine beeinflussen.

Nutzerdaten können ein Optimierungsziel vorgeben, welches Beispielsweise eine Routenplanung und/oder einen Betriebsmodus des Straßennutzfahrzeugs und/oder der Transportkältemaschine betrifft. Beispielsweise kann ein Optimierungsziel besonders akkurater Temperaturführung zu einem erhöhten Energieverbrauch und damit Energiebedarf führen, während ein Optimierungsziel Energie-Effizienz das Gegenteil bewirkt. Dies kann in die Prognose des Energiebedarfs mit einfließen.

Ein angenommenes Bedienerverhalten kann herangezogen werden, um den Energiebedarf, insbesondere den Energieverbrauch, zu prognostizieren. Z.B. kann eine Dauer eines Be-/Entladevorgangs, eine Türöffnungsdauer, eine Vorkühlung von zu transportierenden Waren, eine Einhaltung einer vorgesehenen Route und/oder Kombinationen hieraus zu einer Prognose des Energiebedarfs, insbesondere des Energieverbrauchs, führen.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf Telematikdaten, wobei die Telematikdaten insbesondere zumindest eines der folgenden umfassen:

- zumindest einer Ist-Temperaturen zumindest eines Teils eines Laderaums des Straßennutzfahrzeugs (z.B. Kammer),
- zumindest einer Setpoint zumindest eines Teils eines Laderaums des Straßennutzfahrzeugs (z.B. Kammer),
- zumindest einem Türstatus des Straßennutzfahrzeugs,
- zumindest einem Generator Modus des Straßennutzfahrzeugs,
- zumindest einer Achslast des Straßennutzfahrzeugs, und/oder
- zumindest einer Isolationsgüte zumindest eines Laderaums des Straßennutzfahrzeugs (z.B. K-Wert (inkl. Alterung)).

Telematikdaten können insbesondere Daten sein, welche (z.B. automatisiert und/oder sensorbasiert und/oder modellbasiert) von dem Straßennutzfahrzeug und/oder der Transportkältemaschine erfasst und/oder bereitgestellt werden. Alternativ oder zusätzlich können Telematikdaten Daten betreffen, welche das Straßennutzfahrzeug und/oder die Transportkältemaschine empfangen, z.B. mittels einer Telematikeinrichtung, z.B. von einem Server.

Gemäß einem Ausführungsbeispiel des ersten beispielhaften Aspekts wird vorgeschlagen, dass der Energiebedarf, insbesondere der Energieverbrauch, prognostiziert wird zumindest teilweise basierend auf einem der Folgenden (z.B. Online-Information, z.B. Echtzeit-Daten):

- zumindest einem Wetterdatum, insbesondere zumindest einem von Temperatur, Luftfeuchtigkeit, Sonneneinstrahlung und/oder astronomischer Luftmasse, zu der zumindest einen ersten zu befahrenden Strecke, und/oder
- zumindest einer Verkehrsinformation, insbesondere zumindest einem von (z.B. aktueller) Geschwindigkeit (z.B. durch Stau) und/oder zumindest einem (z.B. aktuellem) Haltepunkt der zumindest einen ersten zu befahrenden Strecke (z.B. Ampel, Kreuzung und/oder Kombinationen hieraus).

Die in diesem Ausführungsbeispiel genannten Daten können unter dem Oberbegriff Online-Daten und/oder Echtzeit-Daten gefasst werden und betreffen Daten, welche das Straßennutzfahrzeug und/oder die Transportkältemaschine aus Informationsquellen beziehen kann, welche aktuelle Informationen bereitstellen, insbesondere betreffend die zumindest eine erste Strecke. Beispielsweise können die Online-Daten von Dritten Parteien (weder Flottenbetreiber noch Fahrzeuganbieter) stammen, z.B. von zumindest einem Wetterdienst und/oder zumindest einem Kartendienstleister.

Beispielsweise kann für die Prognose des Energiebedarfs bekannt sein, dass eine besonders hohe Temperatur einen hohen Energieverbrauch der Transportkältemaschine zur Folge haben wird. Beispielsweise kann eine Etappe besonders hoher Anforderungen (z.B. durch einen wenig bewachsenen und/oder nicht schattierten Abschnitt) an einem besonders warmen und/oder sonnigen Tag als besonders energiebedarfssteigernd bestimmt werden.

Zusätzlich kann bekannt sein, dass eine hohe Sonneneinstrahlung eine hohe Energiegewinnung durch das Solarmodul zur Folge haben wird. Beispielsweise kann andererseits bekannt sein, dass ein Stau in einem Tunnel, einer Innenstadt und/oder einem Waldstück mit geringer Sonneneinstrahlung einer Energiegewinnung per Solarmodul entgegenwirkt.

Online-Daten können beispielsweise über eine Kommunikationsverbindung zu zumindest einer von dem Straßennutzfahrzeug verschiedenen, z.B. stationären, Einrichtung erfolgen, beispielsweise einen Server, beispielsweise über das Internet. Das Straßennutzfahrzeug und/oder die Transportkältemaschine kann hierzu geeignete Kommunikationsmittel aufweisen.

Gemäß einem Ausführungsbeispiel des ersten beispielhaften Aspekts wird vorgeschlagen, dass der Energiebedarf, insbesondere die Energiegewinnung, prognostiziert wird basierend auf zumindest einem der Folgenden

- zumindest einen Ladezustand eines Energiespeichers, insbesondere eines Hochvolt-Energiespeichers, des Straßennutzfahrzeugs,
- zumindest eine Temperatur eines Energiespeichers, insbesondere eines Hochvolt-Energiespeichers, des Straßennutzfahrzeugs,
- einer Rekuperationsenergieprädiktion, insbesondere wobei die Rekuperationsenergieprädiktion basierend auf Topografie- und/oder Verkehrsinformationen zu der zu zumindest einen ersten zu befahrenden ersten Strecke bestimmt wird,
- einer Solarenergieprädiktion, insbesondere wobei die Solarenergieprädiktion basierend auf Wetter- und/oder Topografieinformationen (z.B. Schattierung einer Strecke) zu der zu zumindest einen ersten zu befahrenden ersten Strecke bestimmt wird,
- einer Ladeenergieprädiktion, insbesondere wobei die Ladeenergieprädiktion basierend auf einer (z.B. (Echtzeit-)Verfügbarkeit einer) Infrastruktur und/oder Standzeit während der zumindest einen ersten zu befahrenden ersten Strecke bestimmt wird,
- einer Zugfahrzeugenergieprädiktion, und/oder
- zumindest eines Strompreises (z.B. während einer Befahrung der zumindest einen ersten zu befahrenden Strecke).

Zur Bestimmung des Energiebedarfs, insbesondere der Energiegewinnung, können beispielsweise interne und/oder externe Energiequellen und/oder Energiespeicher betrachtet werden.

Ein Ladezustand eines Energiespeichers (z.B. State of Charge, SOC) kann beispielsweise informativ dafür sein, wie viel Energie aus dem Energiespeicher gewonnen werden und/oder wie viel (z.B. zusätzliche) Energie zwischengespeichert werden kann. Bei hohem Ladezustand des Energiespeichers kann beispielsweise ein prognostizierter Energiebedarf geringer angesetzt werden als bei einem leeren Energiespeicher. Ein Ladezustand kann beispielsweise von einem Bedienerverhalten abhängen, z.B. einem (Unterlassen eines) Aufladen(s) eines Energiespeichers (z.B. vor Fahrtantritt).

Eine Rekuperationsenergieprädiktion kann beispielsweise angeben, wie viel Energie durch Rekuperation gewonnen werden kann, z.B. während einem Befahren zumindest einer der zumindest einen ersten Strecke. Beispielsweise kann das Straßennutzfahrzeug eine Rekuperation von Bremsenergie erlauben. Beispielsweise kann damit auf Strecken, welche viele Geschwindigkeitswechsel aufweisen (z.B. Stadtverkehr oder auch Phasen längerer Bremsmanöver wie abschüssige Strecken) mit einer erhöhten Rekuperationsenergie gerechnet werden als auf Strecken konstanter Geschwindigkeit (z.B. Autobahn). Eine Rekuperationsenergieprädiktion kann basieren auf einem angenommenen Bedienerverhalten, beispielsweise auf einem Einhalten einer Route (z.B. Stadt oder Berge) oder auf einer angenommenen Gleichmäßigkeit der Geschwindigkeit prognostiziert werden.

Eine Solarenergieprädiktion kann beispielsweise eine elektrische Energie angeben, welche mittels eines oder mehrerer Solarmodule gewonnen werden, z.B. während einem Befahren zumindest einer der zumindest einen ersten Strecke. Die Solarenergieprädiktion kann abhängen von aktuellen Wetterverhältnissen (z.B. bekannt aus Online-Daten), beispielsweise Bewölkung oder Sonnigkeit. Die Solarenergieprädiktion kann abhängen von einer Schattierung zumindest einer der zumindest einen ersten Strecke, zum Beispiel durch einen Wald, Gebäude oder Berge. Die Solarenergieprädiktion kann beispielsweise mit einem Ladezustand zumindest eines Energiespeichers zusammenhängen. Beispielsweise kann eine Solarenergieprädiktion höher ausfallen, wenn der Energiespeicher leerer ist, da hierbei elektrische Solarenergie nicht sofort verwendet werden muss (zum Betreiben der Transportkältemaschine) sondern für spätere Verwendung flexibel einsetzbar bleibt. Beispielsweise kann die Solarenergieprädiktion auf einem angenommenen Bedienerverhalten basieren. Z.B. kann dies ein Abstellen des Straßennutzfahrzeugs (z.B. während einer Fahrtpause) in einem sonnigen Bereich sein, sodass das Solarmodul elektrische Energie produziert.

Auch kann dies ein Einhalten einer vorgegebenen Route (durch z.B. nicht-schattierte Bereiche) sein.

Auch kann eine Ladeenergieprädiktion herangezogen werden für eine Prognose eines Energiebedarfs. Beispielsweise kann die Ladeenergieprädiktion basieren auf einer Verfügbarkeit einer Energieversorgungsintrastruktur wie z.B. einer Ladeinfrastruktur, einer Oberleitung, einer induktiven Fahrbahn und/oder Kombinationen hieraus. Beispielsweise kann einer Ladeenergieprädiktion ein angenommenes Bedienerverhalten zugrunde liegen, z.B. ein Anschließen des Straßennutzfahrzeugs oder der Transportkältemaschine an eine Energiequelle, ein Ausfahren eines Stromabnehmers und/oder ein Befahren einer induktiven Fahrbahn.

Die Zugfahrzeugenergieprädiktion kann beispielsweise angeben, welche Energie ausgehend vom Zugfahrzeug an die Transportkältemaschine geliefert werden kann, z.B. während eines Befahrens der zumindest einen ersten Strecke. Z.B. kann diese Prädiktion basieren auf einem Ladezustand einer Energiespeichers des Zugfahrzeugs und/oder auf einer noch zu bewältigenden Strecke und/oder auf einer Information seitens des Zugfahrzeugs.

Ein Strompreis kann z.B. dafür herangezogen werden, ob es wirtschaftlich ist, eine Straßennutzfahrzeug in einer gegebenen Zeit und/oder an einem gegebenen Ort zu laden oder nicht. Beispielsweise kann der Strompreis in einem Land (z.B. morgens) besonders hoch sein, sodass eine Aufladung während dieser Zeit in diesem Land nicht wirtschaftlich ist. Entsprechend kann eine Energiegewinnung (z.B. während der zumindest einen ersten Strecke) als geringer prognostiziert werden und ein Energiebedarf als höher.

Gemäß einem Ausführungsbeispiel des ersten beispielhaften Aspekts wird vorgeschlagen, dass das angenommene Bedienerverhalten zumindest eines der folgenden umfasst:

-   Anschluss des Straßennutzfahrzeugs an eine Energieversorgungsinfrastruktur (z.B. während einer Fahrpause, Wahl einer Art des Anschlusses, Dauer des Anschlusses, Häufigkeit/ Anzahl der Anschlüsse, Durchführung eines retardierten Anschlusses, z.B. falls Ladepunkt bei Beginn einer Fahrpause belegt und frei wird),
-   Türöffnungsverhalten zumindest einer Tür zu einem (z.B. temperierten) Laderaum des Straßennutzfahrzeugs, insbesondere Dauer und/oder Häufigkeit von Türöffnungen,
-   Einhaltung einer vorgegebenen Strecke (z.B. durch schattige und/oder flache Gebiete, um Städte, Stopps an Stellen, die eine Ladeinfrastruktur bieten),
-   Einhaltung eines vorgesehenen Stopps (z.B. wo eine Ladeinfrastruktur verfügbar ist),
-   Einhaltung einer vorgesehenen Abfahrtszeit (z.B. Tageszeit),
-   Vorkühlen (z.B. vor Fahrtantritt, z.B. mittels Energie aus einem Netzanschluss, CEE Energie) einer Warenladung des Straßennutzfahrzeugs, und/oder
-   Vorladung zumindest eines Energiespeichers.

Ein Bedienerverhalten kann z.B. einen Anschluss des Straßennutzfahrzeugs und/oder der Transportkältemaschine an eine Energieversorgungsinfrastruktur umfassen. Z.B. kann der Anschluss während einer Fahrpause vorgenommen werden. Beispielsweise kann eine bestimmte Art von Anschluss gewählt werden, z.B. eine reguläre 230V 50Hz CEE Steckdose in Deutschland, ein Dreiphasen-Starkstrom-Anschluss oder eine Ladestation für Elektrofahrzeuge. Beispielsweise kann eine Ladestation ausgebildet sein als ein Type 1 J1772, Type 2 Mennekes, CHAdeMo, CCS Combo Type 1, CCS Combo Type 2, GB/T oder Supercharger Ladestecker. Ferner kann das Bedienerverhalten eine Dauer des Anschlusses betreffen (z.B. zumindest 5min, 15min, 30min, 1h, 2h, 3h), eine Häufigkeit (z.B. relativ zu einer Anzahl von Fahrpausen und/oder während eines Befahrens einer der zumindest einen ersten Strecke.

Ein Bedienerverhalten (z.B. Fahrerverhalten) kann z.B. eine Durchführung eines retardierten Anschlusses an eine Energieversorgungsinfrastruktur betreffen.

Beispielsweise kann ein Anschluss (z.B. Ladepunkt) belegt sein, z.B. zu Beginn einer Fahrpause. Ein Bediener kann daraufhin einen Stellplatz ohne Lademöglichkeit aufsuchen und für die gesamte Dauer der Fahrpause keine Energie beziehen. Alternativ kann der Bediener bei Freiwerden des Anschlusses einen Ladevorgang beginnen (z.B. oder nicht).

Beispielsweise kann ein Bedienerverhalten basierend auf einer jeweiligen Möglichkeit der Durchführung des Bedienerverhaltens bestimmt werden. Z.B. kann ein Unterlassen eines Anschlusses an eine Energieversorgungsinfrastruktur nur dann als Unterlassen gewertet werden, wenn bekannt ist, dass ein Anschluss möglich ist und nicht, wenn bekannt ist, dass ein Anschluss unmöglich ist (z.B. weil entsprechende Anschlussmöglichkeiten belegt sind).

Ein Bedienerverhalten (z.B. Fahrerverhalten und/oder Lagerarbeiterverhalten) kann z.B. ein Türöffnungsverhalten zumindest einer Tür zu einem Laderaum des Straßennutzfahrzeugs betreffen. Z.B. kann dies eine Dauer und/oder Häufigkeit von Türöffnungen betreffen, beispielsweise während und/oder unabhängig von Be- und/oder Entladevorgängen.

Ein Bedienerverhalte (z.B. Fahrerverhalten)n kann z.B. eine Einhaltung einer vorgegebenen Strecke betreffen. Die Strecke kann beispielsweise derart bestimmt worden sein, dass diese günstig ist für z.B. eine Energiegewinnungsmethode (z.B. Solar und/oder Rekuperation und/oder zur Aufladung an Energieversorgungsinfrastruktureinrichtungen). Eine Einhaltung kann die vorgesehene Energiegewinnung ermöglichen, eine Abweichung diese verhindern.

Ein Bedienerverhalten (z.B. Fahrerverhalten) kann z.B. eine Einhaltung einer vorgegebenen Abfahrtszeit betreffen. Beispielsweise kann eine Abfahrtszeit besonders günstig für eine Energiebilanz der Transportkältemaschine sein, z.B. weil Sonnenlicht zur Solarenergiegewinnung genutzt werden kann und/oder weil Verzögerungen durch Staus vermieten werden. Eine Nicht-Einhaltung der Abfahrtszeit kann demnach zu einer Erhöhung des Energiebedarfs führen.

Beispielsweise kann ein Bedienerverhalten (z.B. Fahrerverhalten) auch eine Einhaltung eines vorgesehenen Stopps (z.B. einer Position eines jeweiligen Stopps (z.B. Rastplatz, Tankstelle);und/oder z.B. einer Dauer eines jeweiligen Stopps) (z.B., für eine Fahrpause) betreffen. Beispielsweise kann eine Route derart bestimmt sein, dass eine Fahrpause an einer Halteposition durchgeführt wird, an der sich eine Ladeinfrastruktur befindet. Eine Wahl dieser Halteposition durch den Fahrer (z.B. Bediener) kann angenommen werden, beispielsweise in zumindest einem Bruchteil der Fahrpausen der zumindest einen ersten Strecke, z.B. für 30%, 50%, 70%, 80%, 90% oder 95% der Fahrpausen.

Ferner kann ein Fahrverhalten ein Vorkühlen einer Warenladung des Straßennutzfahrzeugs betreffen, z.B. vor Fahrtantritt der zumindest einen ersten Strecke und/oder mittels Energie aus einer Energieversorgungsinfrastruktur, insbesondere aus einem Netzanschluss, CEE, und/oder einer Ladestation.

Ferner kann ein Fahrverhalten ein Vorladung zumindest eines Energiespeichers betreffen, z.B. vor Fahrtantritt der zumindest einen ersten Strecke und/oder mittels Energie aus einer Energieversorgungsinfrastruktur, insbesondere aus einem Netzanschluss, CEE, und/oder einer Ladestation.

Gemäß einem Ausführungsbeispiel des ersten beispielhaften Aspekts wird vorgeschlagen, dass der tatsächliche Energiebedarf am Ende der zurückzulegenden Strecke und/oder während eines Zurücklegens der zurückzulegenden Strecke gemessen wird, insbesondere mittels zumindest eines Sensors (z.B. Füllstandssensor Tank, Spannungsmessung Energiespeicher, (z.B. kontinuierliche) Leistungsmessung (z.B. integriert über die Zeit)) und/oder durch die Transportkältemaschine (z.B. Steuerungseinrichtung eingerichtet zur Bestimmung von aufgenommener Energie und/oder Leistung).

Der tatsächliche Energiebedarf kann beispielsweise aus (z.B. über die Zeit integrierten) Leistungsflüssen in dem Straßennutzfahrzeug ermittelt werden. Der tatsächliche Energiebedarf kann sich aus einem tatsächlichen Energieverbrauch und einer tatsächlichen Energiegewinnung zusammensetzen.

Gemäß einem Ausführungsbeispiel des ersten beispielhaften Aspekts wird vorgeschlagen, dass das tatsächliche Bedienerverhalten (z.B. Fahrerverhalten) während eines Zurücklegens der zurückzulegenden Strecke erfasst wird, insbesondere mittels zumindest eines Sensors.

Der Sensor kann insbesondere ein Strom und/oder Spannungssensor sein, welche beispielsweise Ströme und/oder Spannungen zu und/oder in der Transportkältemaschine messen. Hieraus kann beispielsweise eine Leistung abgeleitet werden. Auch kann ein Sensor zumindest einen Füllstandsensor, einen Durchflusssensor und/oder einen Batteriespannungssensor umfassen.

Gemäß einem Ausführungsbeispiel des ersten beispielhaften Aspekts wird vorgeschlagen, dass die Bestimmung zumindest einer Änderungsempfehlung zumindest eines Bedienerverhalten basiert auf

- einer Korrelation zwischen zumindest einer der zumindest einen Bedienerverhaltensabweichung und der Energiebedarfsabweichung, insbesondere basierend auf einer Vielzahl von ersten zu befahrenden Strecken.

Zum Beispiel können von einer Annahme abweichende Bedienerverhalten, welche eine hohe Korrelation mit einem von einer Prognose abweichenden Energiebedarf aufweisen, als ursächlich vermutet werden.

Die Änderungsempfehlung kann derart gestaltet sein, dass sie der Bedienerverhaltensabweichung entgegenwirkt (z.B. wenn die Energiebedarfsabweichung einen gegenüber des prognostizierten Energiebedarfs erhöhten Energiebedarf anzeigt).

Die Änderungsempfehlung kann derart gestaltet sein, dass sie die Bedienerverhaltensabweichung bestärkt (z.B. wenn die Energiebedarfsabweichung einen gegenüber des prognostizierten Energiebedarfs verringerten Energiebedarf anzeigt).

Gemäß einem Ausführungsbeispiel des ersten beispielhaften Aspekts wird vorgeschlagen, dass das Straßennutzfahrzeug ferner eingerichtet ist, zumindest ein Energieeinsparungspotential zumindest einer Änderungsempfehlung zu bestimmen (z.B. und mit der Änderungsempfehlung anzuzeigen).

Zum Beispiel kann die Energiebedarfsabweichung als ein Indikator für ein Energieeinsparungspotential der Änderungsempfehlung herangezogen werden. Die Energiebedarfsabweichung kann als das Energieeinsparungspotential bestimmt werden.

Die Änderungsempfehlung kann ein oder mehrere Bedienerverhalten betreffen.

Z.B. kann eine Änderungsempfehlung angeben, welche Energieersparnis, CO2-Ausstoß-Ersparnis und/oder welche Geldersparnis verursacht wird durch eine Umsetzung der Änderungsempfehlung erreicht wird.

Gemäß einem Ausführungsbeispiel des ersten beispielhaften Aspekts wird vorgeschlagen, dass die Änderungsempfehlung mittels eines Anzeigemittels des Straßennutzfahrzeug oder mittels eines Anzeigemittels eines mit dem Straßennutzfahrzeug verbundenen weiteren Fahrzeug (z.B. Zugmaschine) angezeigt wird.

Gemäß einem Ausführungsbeispiel des ersten beispielhaften Aspekts wird vorgeschlagen, dass das Straßennutzfahrzeug ferner eingerichtet ist eine bedienerverhaltensunabhängige Energiebedarfsabweichung zu bestimmen (z.B. bei Mangel einer Bedienerverhaltensabweichung).

Beispielsweise kann eine bedienerverhaltensunabhängige Energiebedarfsabweichung dann erkannt werden, wenn keine Bedienerverhaltensabweichung vorliegt und/oder wenn eine bestimmte Bedienerverhaltensabweichung bekanntermaßen nicht mit der Energiebedarfsabweichung in Einklang zu bringen ist. Z.B. kann bekannt sein, dass für eine gegebene Bedienerverhaltensabweichung ein tatsächlicher Energiebedarf unterhalb eines prognostizierten Energiebedarfs bleibt. Wenn nun dennoch der tatsächliche Energiebedarf oberhalb des prognostizierten Energiebedarfs liegt, kann dies auf eine bedienerverhaltensunabhängige Energiebedarfsabweichung hindeuten.

Gemäß einem Ausführungsbeispiel des ersten beispielhaften Aspekts wird vorgeschlagen, dass das Straßennutzfahrzeug ferner eingerichtet ist, basierend auf der bedienerverhaltensunabhängige Energiebedarfsabweichung eine Wartungsempfehlung zu bestimmen und anzuzeigen (z.B. zusätzlich oder anstatt der Änderungsanweisung), insbesondere zumindest eines des Folgenden:

- Prüfung einer Isolation des Straßennutzfahrzeugs (z.B. des Koffers),

- Reinigung eines Generator der Transportkältemaschine (z.B. falls ungewöhnliche Generatorleistung),
- Reinigung eines Solardachs des Straßennutzfahrzeugs (z.B. im Falle ungewöhnlicher PV Leistung, z.B. um Einstrahlung zu verbessern), und/oder
- Verbindung des Straßennutzfahrzeugs mit einem Stromnetz (z.B. um Zellladungen auszugleichen, z.B. falls ungewöhnliche Batterie Kapazität).

Es wurde erkannt, dass, wenn nicht das Bedienerverhalten zu einer Energiebedarfsabweichung führt, das Straßennutzfahrzeug und/oder die Transportkältemaschine selbst zu der Energiebedarfsabweichung führen kann. Typischerweise kann dies eine Isolation des Straßennutzfahrzeugs, insbesondere des Laderaums und/oder Kofferaufbaus, betroffen. Auch kann ein Generator der Transportkältemaschine verschmutzt sein, das Solardach verschmutzt sein und/oder ein Energiespeicher nicht leistungsfähig sein, was beispielsweise auf ungleiche Zellladungen zurückgeführt werden kann. Entsprechende Wartungsempfehlungen können ermittelt und angezeigt werden, beispielsweise auf die gleiche Art wie Änderungsempfehlungen.

Gemäß einem zweiten beispielhaften Aspekt wird ein Verfahren zum Betreiben eines Straßennutzfahrzeugs, insbesondere eines Straßennutzfahrzeugs gemäß dem ersten beispielhaften Aspekts, vorgeschlagen, wobei

- Prognostizieren eines Energiebedarfs der Transportkältemaschine für zumindest eine erste zu befahrende Strecke zu, wobei der prognostizierte Energiebedarf zumindest teilweise auf zumindest einem angenommenen Bedienerverhalten basiert,
- Bestimmen eines tatsächlichen Energiebedarfs der Transportkältemaschine für die zumindest eine erste zu befahrende Strecke zu (z.B. nach oder während eines Befahrens der zumindest einen ersten zu befahrenden Strecke),
- Bestimmen zumindest eines tatsächlichen Bedienerverhaltens für die zumindest eine erste zu befahrende Strecke (z.B. nach oder während eines Befahrens der zumindest einen ersten zu befahrenden Strecke),
- Bestimmen, basierend auf einer Energiebedarfsabweichung zwischen dem prognostizierten Energiebedarf und dem tatsächlichen Energiebedarf und auf zumindest einer Bedienerverhaltensabweichung zwischen zumindest einem angenommenem Bedienerverhalten und zumindest einem tatsächlichen Bedienerverhalten, einer Änderungsempfehlung zumindest eines Bedienerverhaltens, und
- Anzeigen, einem Bediener, der Änderungsempfehlung bei oder vor Befahren einer zweiten zu befahrenden Strecke.

Das Verfahren gemäß dem zweiten Aspekt wird zum Beispiel ausgeführt von einem Straßennutzfahrzeug, insbesondere einem Straßennutzfahrzeug gemäß dem ersten Aspekt.

Gemäß einem Ausführungsbeispiel des ersten beispielhaften Aspekts wird vorgeschlagen, dass der Energiebedarf prognostiziert wird basierend auf vergangenen tatsächlichen Energiebedarfen und/oder Energiebedarfsabweichungen und/oder vergangenen tatsächlichen Bedienerverhalten und/oder Bedienerverhaltensabweichungen (z.B. über eine Mehrzahl von Strecken, z.B. bedienerspezifisch oder bedienerunspezifisch, z.B. streckenspezifisch oder streckenunspezifisch).

Gemäß einem Ausführungsbeispiel des ersten beispielhaften Aspekts wird vorgeschlagen, dass das Straßennutzfahrzeug ferner dazu eingerichtet ist, das Prognostizieren eines Energiebedarfs der Transportkältemaschine, das Bestimmen eines tatsächlichen Energiebedarfs der Transportkältemaschine und das Bestimmen zumindest eines tatsächlichen Bedienerverhaltens zumindest einmal zu wiederholen, wobei insbesondere ferner das Bestimmen der Änderungsempfehlung basiert auf einer Mehrzahl von durch die zumindest eine Wiederholung resultierenden Energiebedarfsabweichungen und/oder Bedienerverhaltensabweichungen.

Gemäß einem Ausführungsbeispiel des zweiten beispielhaften Aspekts wird vorgeschlagen, dass der Energiebedarf prognostiziert wird basierend auf einer Prognose eines Energieverbrauchs und einer Prognose einer Energiegewinnung.

Gemäß einem Ausführungsbeispiel des zweiten beispielhaften Aspekts wird vorgeschlagen, dass der Energiebedarf, insbesondere der Energieverbrauch, prognostiziert wird zumindest teilweise basierend auf Nutzerdaten, wobei die Nutzerdaten insbesondere zumindest eines der Folgenden umfassen:

- Routeninformationen zu der zumindest einen ersten zu befahrenden Strecke, insbesondere Informationen zu einem Startpunkt und/oder einem Endpunkt, Informationen zu zumindest einem Koordinatenverlauf der zumindest einen ersten zu befahrenden Strecke (z.B. in Form von Längen- und/oder Breitengrad und/oder Höheninformationen, beispielsweise Reliefenergie und/oder Höhenmeter der zurückzulegenden Strecke),
- zumindest einem Zwischenstopp (z.B. mit oder ohne Türöffnung, z.B. Fahrpause oder Ent-/Verladestopp auf der zumindest einen ersten zu befahrenden Strecke,
- zumindest einem Temperatur-Setpoint, insbesondere einer zulässigen Abweichungen von dem Temperatur-Setpoint,
- zumindest einer Art und/oder einem Wert einer zu transportierenden Ware, und/oder
- zumindest einem Optimierungsziel (z.B. einer Routenplanung und/oder einer Steuerung der Transportkältemaschine), insbesondere eines von Energie-Effizienz, CO2-Einsparung, Wirtschaftlichkeit, Laufzeit, Temperaturführung, und/oder Bauteilverschleiß.

Gemäß einem Ausführungsbeispiel des zweiten beispielhaften Aspekts wird vorgeschlagen, dass der Energiebedarf, insbesondere der Energieverbrauch, prognostiziert wird zumindest teilweise basierend auf Telematikdaten, wobei die Telematikdaten insbesondere zumindest eines der folgenden umfassen:

- zumindest einer Ist-Temperaturen zumindest eines Teils eines Laderaums des Straßennutzfahrzeugs (z.B. Kammer),
- zumindest einer Setpoint zumindest eines Teils eines Laderaums des Straßennutzfahrzeugs (z.B. Kammer),

- zumindest einem Türstatus des Straßennutzfahrzeugs,
- zumindest einem Generator Modus des Straßennutzfahrzeugs,
- zumindest einer Achslast des Straßennutzfahrzeugs, und/oder
- zumindest einer Isolationsgüte zumindest eines Laderaums des Straßennutzfahrzeugs (z.B. K-Wert (inkl. Alterung)).

Gemäß einem Ausführungsbeispiel des zweiten beispielhaften Aspekts wird vorgeschlagen, dass der Energiebedarf, insbesondere der Energieverbrauch, prognostiziert wird zumindest teilweise basierend auf einem der Folgenden (z.B. Online-Information, z.B. Echtzeit-Daten):

- zumindest einem Wetterdatum, insbesondere zumindest einem von Temperatur, Luftfeuchtigkeit, Sonneneinstrahlung und/oder astronomischer Luftmasse, zu der zumindest einen ersten zu befahrenden Strecke, und/oder
- zumindest einer Verkehrsinformation, insbesondere zumindest einem von (z.B. aktueller) Geschwindigkeit (z.B. durch Stau) und/oder zumindest einem (z.B. aktuellem) Haltepunkt der zumindest einen ersten zu befahrenden Strecke (z.B. Ampel, Kreuzung und/oder Kombinationen hieraus).

Gemäß einem Ausführungsbeispiel des zweiten beispielhaften Aspekts wird vorgeschlagen, dass der Energiebedarf, insbesondere die Energiegewinnung, prognostiziert wird basierend auf zumindest einem der Folgenden

- zumindest einen Ladezustand eines Energiespeichers, insbesondere eines Hochvolt-Energiespeichers, des Straßennutzfahrzeugs,
- zumindest eine Temperatur eines Energiespeichers, insbesondere eines Hochvolt-Energiespeichers, des Straßennutzfahrzeugs,
- einer Rekuperationsenergieprädiktion, insbonde-

re wobei die Rekuperationsenergieprädiktion basierend auf Topografie- und/oder Verkehrsinformationen zu der zu zumindest einen ersten zu befahrenden ersten Strecke bestimmt wird,

- einer Solarenergieprädiktion, insbesondere wobei die Solarenergieprädiktion basierend auf Wetter- und/oder Topografieinformationen (z.B. Schattierung einer Strecke) zu der zu zumindest einen ersten zu befahrenden ersten Strecke bestimmt wird,
- einer Ladeenergieprädiktion, insbesondere wobei die Ladeenergieprädiktion basierend auf einer (z.B. (Echtzeit-)Verfügbarkeit einer) Infrastruktur und/oder Standzeit während der zumindest einen ersten zu befahrenden ersten Strecke bestimmt wird, und/oder
- zumindest eines Strompreises (z.B. während einer Befahrung der zumindest einen ersten zu befahrenden Strecke).

Gemäß einem Ausführungsbeispiel des zweiten beispielhaften Aspekts wird vorgeschlagen, dass das angenommene Bedienerverhalten zumindest eines der folgenden umfasst:

- Anschluss des Straßennutzfahrzeugs an eine Energieversorgungsinfrastruktur (z.B. während einer Fahrpause, Wahl einer Art des Anschlusses, Dauer des Anschlusses, Häufigkeit/ Anzahl der Anschlüsse, Durchführung eines retardierten Anschlusses, z.B. falls Ladepunkt bei Beginn einer Fahrpause belegt und frei wird),
- Türöffnungsverhalten zumindest einer Tür zu einem Laderaum des Straßennutzfahrzeugs, insbesondere Dauer und/oder Häufigkeit von Türöffnungen,
- Einhaltung einer vorgegebenen Strecke (z.B. durch schattige und/oder flache Gebiete, um Städte, Stopps an Stellen, die eine Ladeinfrastruktur bieten),
- Einhaltung eines vorgesehenen Stopps (z.B. wo eine Ladeinfrastruktur verfügbar ist),
- Vorkühlen (z.B. vor Fahrtantritt, z.B. mittels Energie aus einem Netzanschluss, CEE Energie) einer Warenladung des Straßennutzfahrzeugs, und/oder
- Vorladung zumindest eines Energiespeichers.

Gemäß einem Ausführungsbeispiel des zweiten beispielhaften Aspekts wird vorgeschlagen, dass die Bestimmung zumindest einer Änderungsempfehlung zumindest eines Bedienerverhalten basiert auf

- einer Korrelation zwischen zumindest einer der zumindest einen Bedienerverhaltensabweichung und der Energiebedarfsabweichung, insbesondere basierend auf einer Vielzahl von ersten zu befahrenden Strecken.

Gemäß einem Ausführungsbeispiel des zweiten beispielhaften Aspekts wird vorgeschlagen, dass das Verfahren ferner umfasst, zumindest ein Energieeinsparungspotential zumindest einer Änderungsempfehlung zu bestimmen (z.B. und mit der Änderungsempfehlung anzuzeigen).

Gemäß einem Ausführungsbeispiel des zweiten beispielhaften Aspekts wird vorgeschlagen, dass das Verfahren ferner umfasst, eine bedienerverhaltensunabhängige Energiebedarfsabweichung zu bestimmen (z.B. bei Mangel einer Bedienerverhaltensabweichung).

Gemäß einem Ausführungsbeispiel des zweiten beispielhaften Aspekts wird vorgeschlagen, dass das Verfahren ferner umfasst, basierend auf der bedienerverhaltensunabhängige Energiebedarfsabweichung eine Wartungsempfehlung zu bestimmen und anzuzeigen (z.B. zusätzlich oder anstatt der Änderungsanweisung), insbesondere zumindest eines des Folgenden:

- Prüfung einer Isolation des Straßennutzfahrzeugs (z.B. des Koffers),
- Reinigung eines Generator der Transportkältemaschine (z.B. falls ungewöhnliche Generatorleistung),
- Reinigung eines Solardachs des Straßennutzfahrzeugs (z.B. im Falle ungewöhnlicher PV Leistung, z.B. um Einstrahlung zu verbessern), und/oder
- Verbindung des Straßennutzfahrzeugs mit einem Stromnetz (z.B. um Zellladungen auszugleichen, z.B. falls ungewöhnliche Batterie Kapazität).

Gemäß einem dritten beispielhaften Aspekts wird eine Vorrichtung vorgeschlagen (z.B. Steuerungseinrichtung des Straßennutzfahrzeugs und/oder der Transportkältemaschine) umfassend Mittel eingerichtet zum Steuern und/oder Ausführen eines Verfahrens gemäß des zweiten beispielhaften Aspekts (beispielsweise wobei die Mittel umfassen, zumindest einen Prozessor und einen Speicher, wobei der Speicher Instruktionen umfasst, die, wenn sie von dem Prozessor ausgeführt werden, dazu führen, dass Vorrichtung das Verfahren ausführt und/oder weitere Mittel wie beispielsweise zumindest ein Kommunikationsmittel, mit dem das Steuergerät beispielsweise mit zumindest einer weiteren Komponente kommunizieren kann, beispielsweise mit der Transportkältemaschine, z.B. einem Steuergerät der Transportkältemaschine und/oder mit der Energiequelle, der zumindest einen temperaturbeeinflussenden Komponente, dem zumindest einen Lüfter, und/oder mit dem Solarmodul und/oder mit zumindest einer von dem Straßennutzfahrzeug verschiedenen, z.B. stationären, Einrichtung, z.B. einem Server, z.B. zum Abrufen und/oder Übermitteln von Daten, insbesondere Nutzer-Daten, Online-Daten und/oder Telematikdaten).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs jedoch als notwendiger Bestandteil der vorliegenden Erfindung erachtet werden.

Es zeigen:

Fig. 1      eine schematische Darstellung einer beispielhaften Ausführungsform eines Straßennutzfahrzeugs gemäß der Erfindung;

Fig. 2      eine schematische Darstellung einer beispielhaften Ausführungsform eines Straßennutzfahrzeugs gemäß der Erfindung;

Fig. 3a,b      eine schematische Darstellung einer beispielhaften Ausführungsform eines Straßennutzfahrzeugs gemäß der Erfindung;

Fig. 4      ein Flussdiagramm einer beispielhaften Ausführungsform einer Betriebsart eines Straßennutzufahrzeugs gemäß der Erfindung;

Fig. 5      ein Flussdiagramm einer beispielhaften Ausführungsform einer Betriebsart eines Straßennutzufahrzeugs gemäß der Erfindung;

Fig. 6      ein Flussdiagramm einer beispielhaften Ausführungsform einer Betriebsart eines Straßennutzufahrzeugs gemäß der Erfindung;

Fig. 7a,b      ein Flussdiagramm einer beispielhaften Ausführungsform einer Betriebsart eines Straßennutzufahrzeugs gemäß der Erfindung;

Fig. 8      ein Flussdiagramm einer beispielhaften Ausführungsform einer Betriebsart eines Straßennutzufahrzeugs gemäß der Erfindung;

Fig. 9      ein Blockdiagramm einer beispielhaften Ausführungsform Vorrichtung zur Ausführung eines Verfahrens gemäß der Erfindung;

Fig. 10      ein Flussdiagramm einer beispielhaften Ausführungsform einer Betriebsart eines Straßennutzufahrzeugs gemäß der Erfindung.

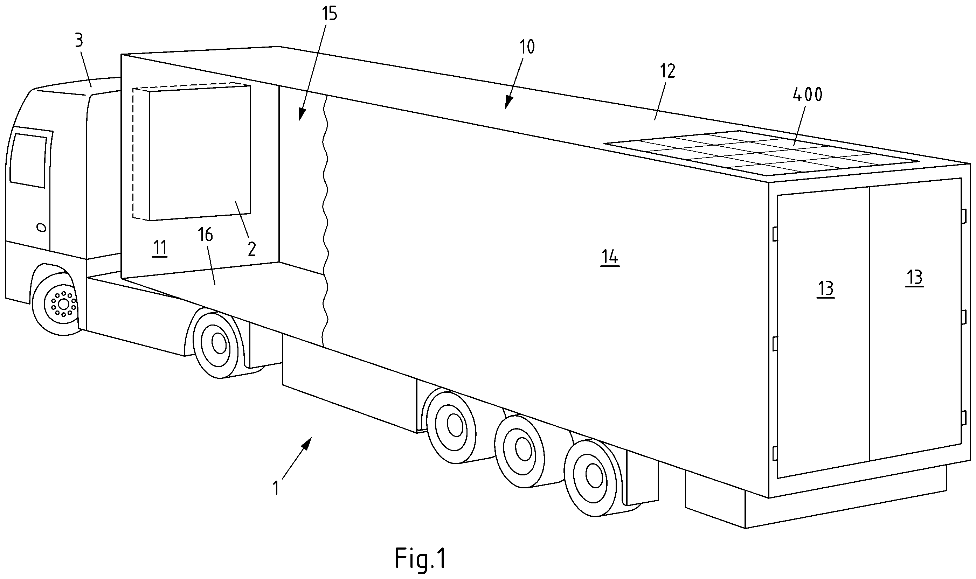

Fig. 1 ist eine schematische Darstellung einer beispielhaften Ausführungsform eines Fahrzeugs 1 gemäß der Erfindung, beispielsweise nach dem ersten Aspekt der Erfindung.

Das gezeigte Fahrzeug 1 ist ein Nutzfahrzeug 1, genauer ein Anhänger 1, genauer noch ein Sattelauflieger 1, mit einem Kofferaufbau 10. Der Kofferaufbau 10 umfasst eine feste Stirnwand 11, ein festes Dach 12, eine durch Flügeltüren 13 gebildete Rückwand und feste Seitenwände 14. Der Kofferaufbau 10 umschließt dabei einen Laderaum 15 zur Aufnahme von zu transportierenden Gütern.

In dem Fahrzeug 1 ist eine Vorrichtung 200 gemäß dem dritten Aspekt der Erfindung angeordnet, deren ungefähre Position gestrichelt angedeutet ist. Hierbei kann es sich beispielsweise um eine Telematikeinheit 200 des Anhängers 1 handeln.

Die Transportkältemaschine 2 dient zum Kühlen und/oder Heizen des Laderaums 15, so dass temperaturempfindliche Güter in dem Laderaum 15 transportiert werden können.

Zu diesem Zweck kann die Transportkältemaschine 2 beispielsweise Luft kühlen und/oder heizen und anschließend in den Laderaum 15 blasen.

Auf dem Dach 12 kann zumindest ein Solarmodul und/oder ein Solarpanel 400 angeordnet sein.

Der Sattelauflieger 1 wird von einem Zugfahrzeug 3 gezogen.

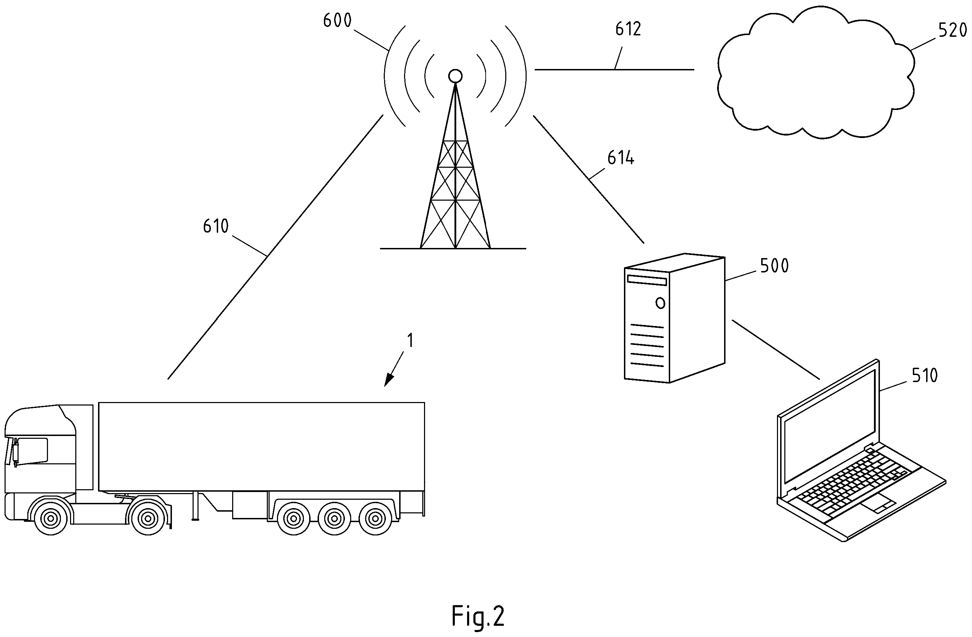

Fig. 2 zeigt ein System umfassend ein Straßennutzfahrzeug 1, z.B. nach dem ersten Aspekt, und weitere Komponenten. Das Straßennutzfahrzeug 1 ist beispielsweise mittels einer Mobilfunkverbindung 610 mit einem Telekommunikationsnetz 600 verbunden. Alternative Kommunikationsverbindungen (z.B. kabelloses Local Area Network, WLAN), kabelgebundenes LAN, Bluetooth und/oder Kombinationen hieraus sind alternativ oder zusätzlich möglich.

Das Straßennutzfahrzeug 1 ist (beispielsweise über Kommunikationsverbindungen 610, 612, 614 mit zumindest einer weiteren Einrichtung 500, beispielsweise einem Server 500, verbunden. Beispielsweise kann die Einrichtung 500 Teil eines Telematiksystems sein, in welches das Straßennutzfahrzeug 1 eingebunden ist. Mit der Einrichtung 500 kann das Straßennutzfahrzeug 1 beispielsweise Daten austauschen, z.B. Daten, welche von (z.B. Sensoren des) Straßennutzfahrzeug (s) 1 erfasst und/oder generiert werden und/oder Daten, welche ausgehend von der Einrichtung 500 an das Straßennutzfahrzeug 1 übermittelt werden.

Die Einrichtung 500 kann beispielsweise zur Überwachung und/oder Organisation von mehreren Straßennutzfahrzeugen, z.B. einer Flotte von Straßennutzfahrzeugen eingerichtet sein. Beispielsweise kann mittels der Einrichtung 500 zumindest eine Route des Straßennutzfahrzeugs 1 geplant werden. Alternativ oder zusätzlich kann ein oder mehrere Ziele vorgegeben werden und das Straßennutzfahrzeug 1 kann eine oder mehrere dazu passende Routen ermitteln.

Insbesondere kann das Straßennutzfahrzeug 1 zumindest einen oder mehrere (z.B. prognostizierte und/oder tatsächliche) Energiebedarfe der Transportkältemaschine 2 an die Einrichtung 500 übermitteln und/oder zumindest ein oder mehrere (z.B. angenommene und/oder tatsächliche) Bedienerverhalten. Beispielsweise können angenommenes Bedienerverhalten und/oder prognostizierter Energiebedarf seitens der Einrichtung 500 und/oder seitens des Straßennutzfahrzeugs 1 bestimmt werden. Beispielsweise können tatsächliche Bedienerverhalten und/oder ein tatsächlicher Energiebedarf seitens des Straßennutzfahrzeugs 1 bestimmt werden.

An einem mit der Einrichtung 500 verbundenen Endgerät 510, z.B. einem Computer, insbesondere einem Laptop, wie gezeigt, können Daten zu zumindest einem Straßennutzfahrzeug 1 abgerufen werden und/oder Informationen (z.B. Befehle) an das Straßennutzfahrzeug 1 übermittelt werden. Beispielsweise kann das Endgerät 510 von einem Disponenten als eine Art von Bediener des Straßennutzfahrzeugs bedient werden. Z.B. kann eine oder mehrere Routenvorgaben (z.B. Start, Ziel, Optimierungsziel, Temperatur-Setpoint, und/oder Kombinationen hieraus) an das Straßennutzfahrzeug 1 übermittelt werden. Das Endgerät 510 kann beispielsweise dazu dienen, zumindest eine Änderungsempfehlung dem Bediener des Endgeräts 510 (z.B. Disponent) anzuzeigen (z.B. visuell, akustisch oder haptisch).

Ferner kann das Straßennutzfahrzeug 1 dazu eingerichtet sein, Online-Daten abzurufen wie insbesondere Wetter-Daten und/oder Verkehrsdaten. Z.B. können diese von Drittanbietern wie Wetterdiensten und/oder Kartendienstleistern 520 abgerufen werden.

Das Straßennutzfahrzeug 1 und/oder die Einrichtung 500 kann dazu eingerichtet sein, eine Änderungsempfehlung zu bestimmen, welche zumindest eine Änderung zumindest eines Bedienerverhaltens betrifft.

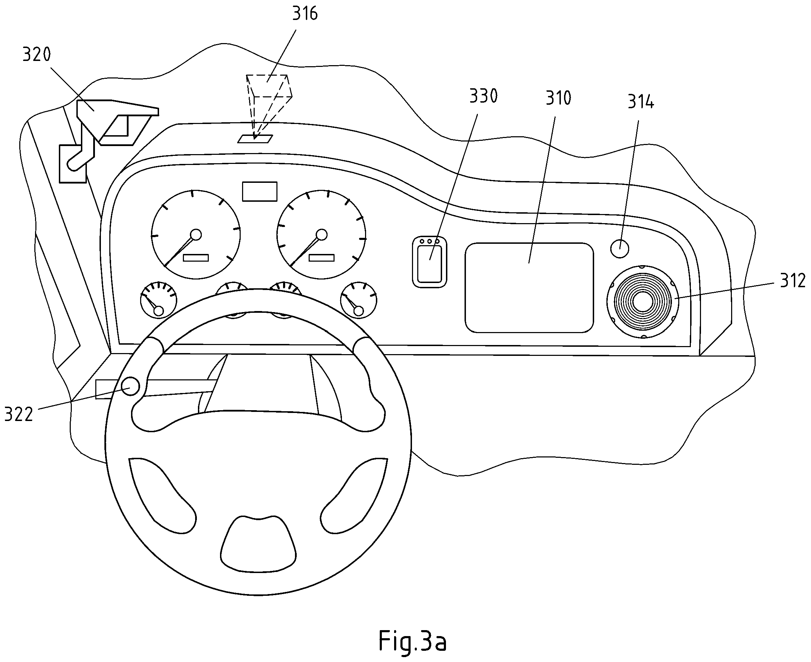

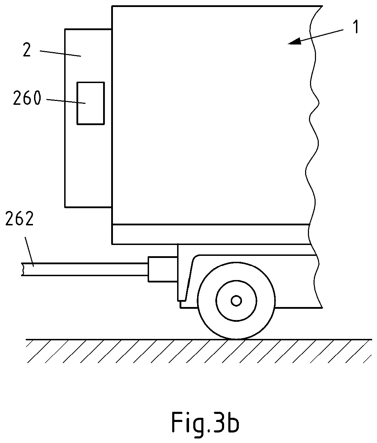

Fig. 3a,b zeigt Möglichkeiten auf, eine Änderungsempfehlung einem Bediener anzuzeigen, wobei der Bediener ein Fahrer ist.

Eine Änderungsempfehlung kann beispielsweise eine Empfehlung umfassen, zumindest ein Bedienerverhalten anzupassen. Beispielsweise kann eine Änderungsempfehlung eine empfohlene Abweichung von einem (z.B. tatsächlichen, z.B. vergangenen Bedienerverhalten) angeben. Beispielsweise kann eine Änderungsempfehlung eine Aufforderung umfassen der Art "Bitte halten Sie die vorgegebenen Pausenorte ein.", "Bitte meiden Sie schattige Abstellorte.", "Bitte verbinden Sie das Fahrzeug bei Fahrtpausen mit einer Ladeinfrastruktur", "Bitte halten Sie Abfahrtzeiten ein.", "Bitte halten Sie Pausenzeiten ein.", "Bitte stellen Sie möglichst kurze Türöffnungszeiten sicher.".

Fig. 3a stellt ein Armaturenbrett dar, welches z.B. ein Lenkrad und Anzeigeinstrumente umfassen kann. Das Armaturenbrett kann beispielsweise zu einem ein Straßennutzfahrzeug 1, z.B. nach dem ersten Aspekt, ziehendes Zugfahrzeug 3 gehören. Beispielsweise kann ein Monitor 310, z.B. als Teil eines Infotainment-Systems, ein Lautsprecher 312, eine Signalleuchte 314 und/oder ein Heads-Up-Display 316 vorgesehen sein. Zumindest eins dieser Anzeigeelemente kann beispielsweise genutzt werden, um die Änderungsempfehlung anzuzeigen.

Das Straßennutzfahrzeug 1 kann dazu eingerichtet sein, zumindest eins der Anzeigeelemente anzusteuern, insbesondere derart, dass die Änderungsempfehlung angezeigt wird.

Ferner kann zumindest ein biometrischer Sensor vorgesehen sein, welcher eine Identität des Bedieners (z.B. Fahrers) bestimmen kann, z.B. eine Kamera 320 oder ein Fingerabdruckscanner 322. Alternativ oder zusätzlich kann zur Identifikation eines Fahrers ein Lesegerät 330, z.B. für Chipkarten und/oder für Transponder, z.B. Radio Frequency Identification, RFID, vorgesehen sein.

Durch eine Identifikation des Fahrers können beispielsweise Fahrerverhalten einem Fahrer zugeordnet werden und/oder Änderungsempfehlungen Fahrerspezifisch bestimmt und/oder angezeigt werden.

Fig. 3b zeigt ein Straßennutzfahrzeug 1, z.B. nach dem ersten Aspekt, umfassend eine Transportkältemaschine 2. Die Transportkältemaschine umfasst ein Anzeigeelement 260. Beispielsweise kann das Anzeigeelement 260 ein Monitor 260 sein. Auf dem Anzeigeelement 260 kann alternativ oder zusätzlich zu einem Anzeigeelement wie in Fig. 3a gezeigt eine Änderungsempfehlung angezeigt werden.

Ferner ist in Fig. 3b eine Kommunikationsverbindung 262 gezeigt, welche beispielsweise dazu eingerichtet sein kann, das Straßennutzfahrzeug 1 einem Zugfahrzeug 3 kommunikativ zu koppeln.

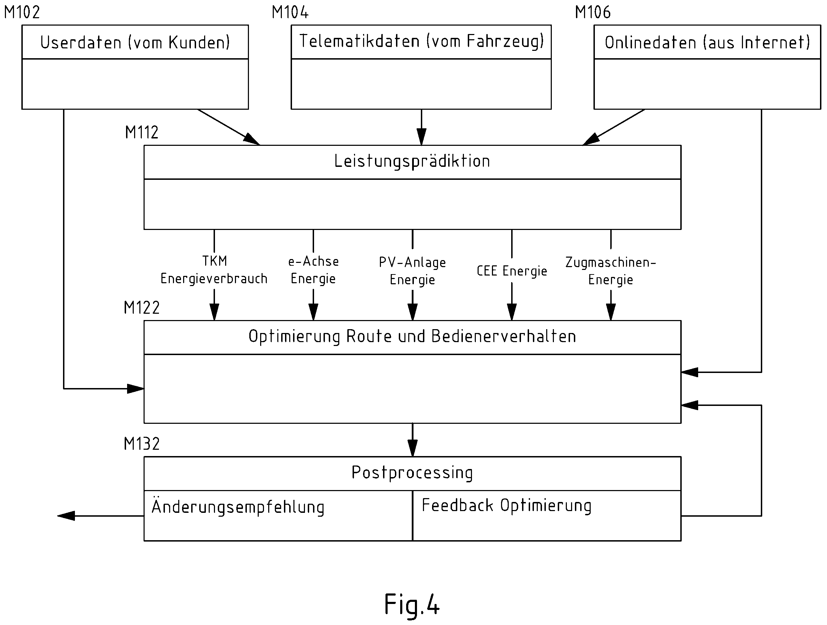

Fig. 4 illustriert ein Verfahren, z.B. nach dem zweiten Aspekt, zum Betrieb des Straßennutzfahrzeugs 1, z.B. nach dem ersten Aspekt.

Basierend auf Nutzerdaten (M102), Telematikdaten (M104) und/oder Online-Daten (M106) können Leistungen und/oder Energien der Transportkältemaschine in Schritt M112 bestimmt werden.

Beispielsweise können Nutzerdaten umfassen: Routeninformationen inkl. Ladeinfrastruktur sowie Start-/Endpunkt, Zwischenstopps, Türöffnungen inkl. Dauer, Temperatur-Setpoints, inkl. zulässiger Abweichungen, Warenart und/oder Warenwert, Optimierungsziel (z.B. Effizienz, $CO_2$, Wirtschaftlichkeit, Laufzeit, Temperaturführung, und/oder Bauteilverschleiß).

Beispielsweise können Telematikdaten umfassen: State of Charge (SOC) einer Hochvolt (HV) Batterie, Temperatur einer HV-Batterie, Ist-Temperaturen von zumindest einer Kammer des Laderaums, Temperatur Setpoints von zumindest einer Kammer, zumindest en Türstatus, zumindest ein Generator Modus, zumindest eine Achslast (z.B. Gewicht des Fahrzeuges), und/oder zumindest eine Isolation des Laderaums (z.B. K-Wert, z.B. inkl. Alterung).

Beispielsweise können Online-Daten umfassen: Wetterdaten, z.bb. Temperatur, Luftfeuchtigkeit, Sonneneinstrahlung und/oder astronomische Luftmasse, Topografie, z.B. Koordinatenverlauf in Form von Längen- und/oder Breitengrad sowie Höhe, Verkehrsinformationen, z.B. Geschwindigkeit, Haltepunkte z.B. durch Ampeln, Kreuzungen, Staus, und/oder Kombinationen hieraus, z.B. Strompreise.

In der Prädiktion in Schritt M112 kann ein Energiebedarf der Transportkältemaschine bestimmt werden, insbesondere ein Energieverbrauch durch die Transportkältemaschine für die Temperierung des Laderaums und eine Energiegewinnung durch Rekuperation, Solar und/oder Anschluss an eine Infrastruktur, z.B. an ein Stromnetz. Die Prädiktion kann vor einer Fahrt (z.B. der zumindest einen ersten Fahrt) oder auch während einer Fahrt (z.B. der zumindest einen ersten Fahrt) vorgenommen werden.

Ein Energieverbrauch kann beispielsweise bestimmt (z.B. prognostiziert) werden in Abhängigkeit von zumindest einem von Temperatur, Luftfeuchtigkeit, Sonneneinstrahlung, astronomischer Luftmasse (durch Topografie), Wind- und/oder Fahrgeschwindigkeit (z.B. durch Verkehrsinformationen), Routeninformationen wie z. B. Zwischenstopps und Türöffnungen und/oder Art und Menge der Ware.

Eine Energiegewinnung kann beispielsweise bestimmt (z.B. prognostiziert) werden abhängig von der Gewinnungsart. Z.B. für eine Rekuperation, z.B. mittels einer e-Achse (z.B. Generator-Achse) in Abhängigkeit von zumindest einem von Topografie- und Verkehrsinformationen, beispielsweise umfassend eine entsprechende Identifizierung des Rekuperationspotenzials. Beispielsweise kann unter Rekuperation verstanden werden, dass eine elektrische Maschine betrieben wird, wenn die Zugmaschine kein Antriebsmoment zur Verfügung stellt.

Im Falle eines Solarmoduls (Photovoltaik, PV, Anlage) kann abhängig von Wetter- und Topografieinformationen eine Energiegewinnung prognostiziert werden.

Im Falle eines netzgebundenen (CEE-)Betriebs kann eine hiermit verbundene Energiegewinnung in Abhängigkeit von (z.B. Ausgestaltung und/oder Verfügbarkeit einer) Infrastruktur und/oder (z.B. angenommener) Standzeit des Straßennutzfahrzeugs eine Energiegewinnung prognostiziert werden.

Ferner kann Energie ausgehend von einem Zugfahrzeug gewonnen werden, z.B. mittels einer entsprechenden Verbindung zu einem Zugfahrzeug. Die hierbei verfügbare Energie kann z.B. basierend auf einem Ladezustand (z.B. SOC) und/oder einer verbleibenden Strecke prognostiziert werden.

Bei einer (HV-) Batterie kann die hieraus zu gewinnende und/oder hierin einspeicherbare Energie prognostiziert werden basierend auf zumindest einem von Entlade- und Ladezeiten, z.B. in Abhängigkeit von SOC, State of Health (SOH), Last, und/oder Temperatur,

In Schritt M122 wird eine Route, beispielsweise berechnet. Beispielsweise kann dies basieren auf der Energieverbrauchsprognose aus Schritt M112. Auch kann eine Wechselwirkung zwischen Energiebedarfsbestimmung in Schritt M112 und Routenbestimmung in M122 bestehen. Z.B. kann der Energiebedarf (z.B. Energieverbrauch und/oder Energiegewinnung) von einer Wahl der Route und/oder von einem Bedienerverhalten abhängen und dementsprechend basierend darauf prognostiziert werden. Auch kann die Route basierend auf einem Einfluss der Routenwahl auf den Energiebedarf berechnet werden.

Der Energiebedarf wird (z.B. in Schritt M112) insbesondere für zumindest eine erste Strecke bestimmt, beispielsweise für eine bestimmte Route (z.B. bestimmt in Schritt M122).

Die Optimierung kann z.B. abzielen auf eine Minimierung eines Energieverbrauchs der Transportkältemaschine (z.B. von Treibstoff und/oder elektrischer Energie), auf eine Minimierung eines Energiemehrverbrauchs eine ziehenden Einheit (z.B. Zugfahrzeug) durch eine Rekuperationsachse des Straßennutzfahrzeugs (z.B. Trailer), eine Maximierung einer durch eine Rekuperationsachse rekuperierten Leistung und/oder Energie, eine Maximierung einer von einem Solar-Modul gelieferten Leistung und/oder einer Nutzung und/oder Speicherung von durch das Solar-Modul gelieferten Leistung durch die Transportkältemaschine, Minimierung einer Differenz zwischen einem Leistungsbedarf einer Transportkältemaschine und einer Summe von verfügbaren Leistungen aus mehreren (z.B. allen) verfügbaren Quellen und/oder Kombinationen hieraus. Auch kann beispielsweise eine gemeinsame Zielfunktion wie beispielsweise eine Maximierung einer Wirtschaftlichkeit, eines Verschleiß (z.B. von zumindest einer Komponente der Transportkältemaschine und/oder des Gesamtsystems), einer Laufzeit (z.B. von zumindest einer Komponente der Transportkältemaschine und/oder des Gesamtsystems) optimiert werden.

Im Postprocessing (Schritt M132) kann insbesondere während oder nach einer zumindest ersten zu befahrenden Strecke eine Auswertung der Prädiktion vorgenommen werden. Z.B. kann ein tatsächlicher (z.B. gemessener) Energiebedarf mit einem prognostizierten Energiebedarf verglichen werden und insbesondere eine Energiebedarfsabweichung bestimmt werden. Auch kann ein tatsächliches (z.B. aufgezeichnetes) Bedienerverhalten mit einem angenommenen Bedienerverhalten verglichen werden und z.B. eine Bedienerverhaltensabweichung bestimmt werden.

Beispielsweise kann zumindest eine bestimmte Energiebedarfsabweichung und/oder Bedienerverhaltensabweichung bei zukünftigen Energiebedarfsprognosen in Schritt M112 und/oder zukünftigen Routenplanungen in Schritt M122 berücksichtigt werden. Beispielsweise kann somit eine kontinuierliche Verbesserung der Vorhersagequalität und/oder der Routenplanung erreicht werden.

Beispielsweise können zumindest eine von Energiebedarfsprognose in Schritt M112 und/oder Routenplanung in Schritt M122 zumindest teilweise basieren auf vergangenen tatsächlichen Energiebedarfen oder Energiebedarfsabweichungen und/oder vergangenen tatsächlichen Bedienerverhalten und/oder Bedienerverhaltensabweichungen.

Im Postprocessing M132 kann weiterhin eine Änderungsempfehlung bestimmt werden, welche einem Bediener angezeigt werden kann, beispielsweise vor Beginn einer neuen (zweiten) Fahrt.

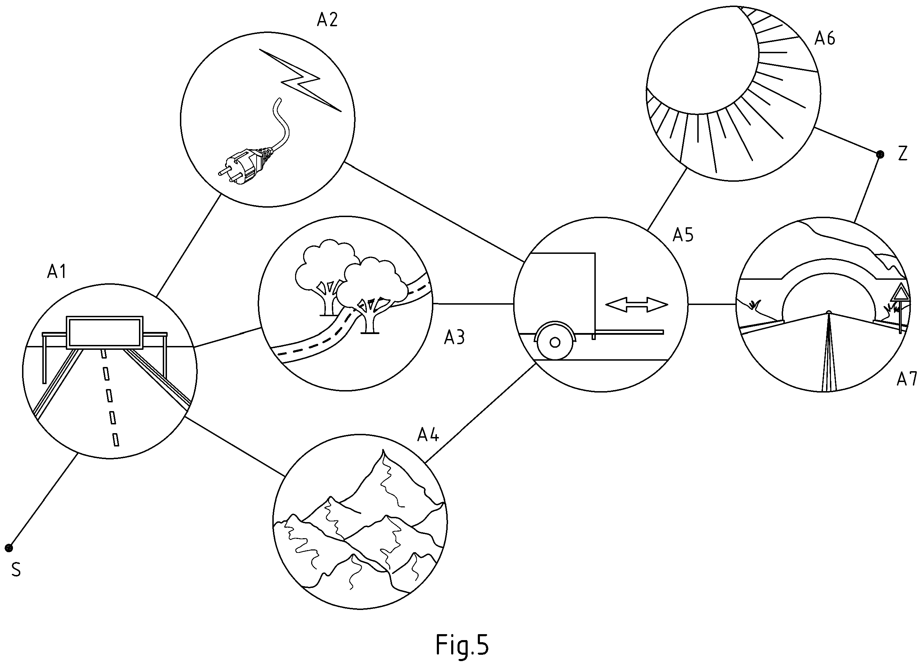

Fig. 5 demonstriert beispielhaft Optionen für Routen und Bedienerverhalten für eine Strecke von einem Startpunkt S zu einem Ziel Z. Je nach Routenführung kann die Strecke beispielsweise über eine Hochgeschwindigkeitsstraße wie z.B. eine Autobahn A1 führen, einen Halt an einer Lademöglichkeit A2 beinhalten, durch einen schattigen Wald A3 führen, entlang von Erhöhungen wie z.B. ein Gebirge A4 verlaufen, einen oder mehrere Ent-/Ladehalte A5 verschiedener (z.B. verschieden lang gestaltbarer, z.B. durch den Bediener) Dauer umfassen, über sonnige Etappen A6 oder verdunkelte Tunnel A7 führen.

Eine Route, welche eine CO2-Bilanz optimiert wird womöglich eher einen Stopp an einer Ladeinfrastruktur A2 einplanen, als eine (z.B. kürzere) Strecke durch ein Gebirge A4 zu wählen. Weicht ein Bediener von der Route ab und nimmt stattdessen eine Strecke durch einen Wald, kann dies z.B. dazu führen, dass keine oder weniger Solarenergie gewonnen wird, nicht geladen werden kann, und ein Generator der Transportkältemaschine einen Energiespeicher unterstützten muss, was vermeidbar gewesen wäre. Hier führt eine Bedienerverhaltensabweichung zu einer Energiebedarfsabweichung nach oben (zu einem erhöhten Energiebedarf).

Ähnlich kann ein Verladestopp A5 eine angenommene Dauer haben, z.B. eine angenommene Türöffnungsdauer. Eine Abweichung (z.B. längere Öffnungsdauer einer Tür) kann zu einem höheren als prognostizierten Energiebedarf führen.

Eine Wahl zwischen sonniger Strecke A6 und dunkler Strecke A7 kann beispielsweise unter anderem darauf basieren, ob ein Solarmodul auf dem Straßennutzfahrzeug vorhanden ist oder nicht. Falls es vorhanden ist, kann Sonne auf Abschnitt A6 vorteilhaft genutzt werden und dessen Befahrung kann bevorzugt sein. Ferner kann eine Wetterlage die Sonneneinstrahlung beeinflussen, sodass eine Befahrung von Strecke A6 nur ohne Bewölkung lohnend ist. Schließlich kann Strecke A7 kürzer sein, sodass bei Bewölkung und/oder falls kein Solarmodul vorhanden ist, A7 vorteilhaft sein kann.

Ein Bediener kann entgegen der bestimmten Route (beispielsweise aus Gewohnheit und/oder weil er/sie fälschlicherweise annimmt das (kein) Solarmodul vorhanden ist) die ungünstigere der beiden Strecken auswählen, sodass der Energiebedarf steigt.

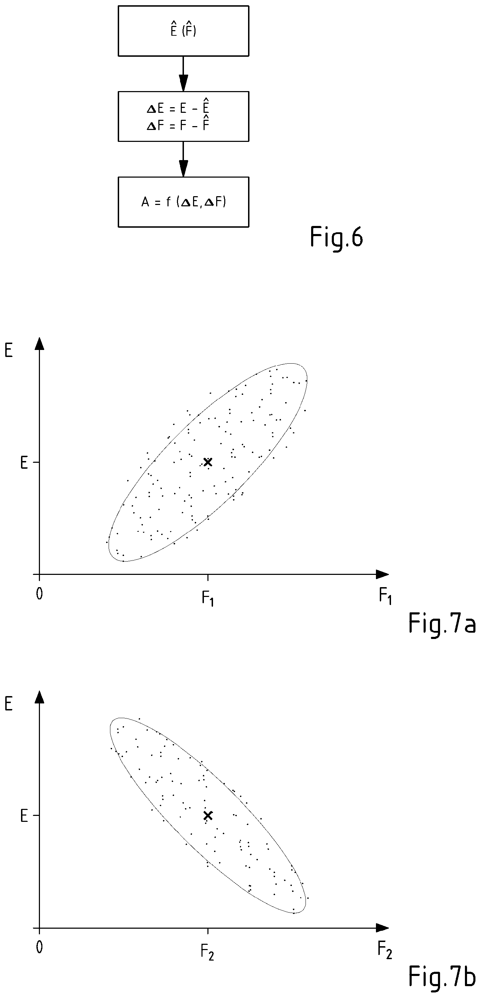

Fig. 6 zeigt vereinfacht einen Ablauf einer Bestimmung von Energiebedarf und Bedienerverhalten. Z.B. basierend auf einer Routenplanung wird ein prognostizierter Energiebedarf $\hat{E}(\hat{F})$ bestimmt, welcher von einem angenommenen Bedienerverhalten $\hat{F}$ abhängt. Nach oder während einer Fahrt werden dann Abweichungen zwischen prognostiziertem und tatsächlichen Energiebedarf $\Delta E = E - \hat{E}(\hat{F})$, Energiebedarfsabweichung, und zwischen angenommenen und tatsächlichem Energiebedarf $\Delta F = F - \hat{F}$, Bedienerverhaltensabweichung, bestimmt. Schließlich kann eine Änderungsempfehlung $A = f(\Delta E, \Delta F)$ zumindest ein Bedienerverhalten betreffend basierend auf der Energiebedarfsabweichung und/oder der Bedienerverhaltensabweichung bestimmt werden.

Fig. 7a,b, zeigen vereinfachte Diagramme, in welchen jeweils ein Bedienerverhalten $F_1$ und $F_2$ gegen einen Energiebedarf E aufgetragen ist. Das angenommene Bedienerverhalten ist jeweils als $\widehat{F_1}, \widehat{F_2}, \hat{E}$ eingezeichnet. Ein Bedienerverhalten kann beispielsweise eine (z.B. durchschnittliche) Türöffnungsdauer, eine (z.B. prozentuale, z.B. über die Streckenlänge berechnete) Abweichungsquote von einer vorgegebenen Route (z.B. über 10%, 20%, 30% oder mehr der Route wurde von der vorgegebenen Route abgewichen), eine (z.B. prozentuale) Anschlussquote an eine Lademöglichkeit (z.B. x% von Y Lademöglichkeiten angeschlossen) und/oder eine (z.B. durchschnittliche) Anschlussdauer. Ein Punkt im Koordinatensystem kann z.B. einer jeweiligen ersten befahrenen Strecke entsprechen.

In Fig. 7a führt eine Variation des Bedienerverhaltens $F_1$ nach oben (höherer Wert und/oder Betrag) zu einer Erhöhung des Energiebedarfs. Beispielsweise kann $F_1$ eine Türöffnungsdauer oder eine Routenabweichungsquote sein. In Fig. 7b führt eine Variation des Bedienerverhaltens $F_2$ nach oben zu einer Erhöhung des Energiebedarfs. Beispielsweise kann $F_2$ eine Anschlussquote an eine Lademöglichkeit oder eine Anschlussdauer sein.

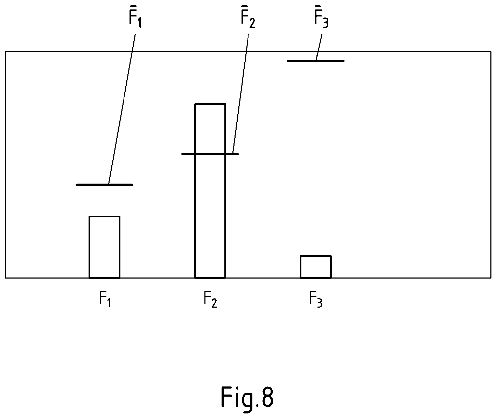

Fig. 8 zeigt eine beispielhafte Anzeige dreier Fahrverhaltensabweichung an. Beispielsweise kann eine derartige Ansicht für einen Flottenmanager einer Flotte aus Straßennutzfahrzeugen angezeigt werden. Auch der x-Achse sind die drei Bedienerverhalten aufgetragen. Auf der y-Achse ist ein jeweiliger Wert aufgetragen (z.B. normalisiert je Bedienerverhalten). Durchschnittswerte, z.B. über mehrere Bediener und/oder mehrere erste Strecken, sind als horizontale Striche und als $\overline{F_1}, \overline{F_2}, \overline{F_3}$ gezeigt. Beispielsweise können Durchschnittswerte als angenommene Bedienerverhalten herangezogen werden. Z.B. kann das Diagramm für einen gegebenen Bediener angezeigt werden, wobei Balken die tatsächlichen Fahrverhalten des jeweiligen Bedieners angeben.

Eine derartige Übersicht kann einem Manager einer Fahrzeugflotte Auskunft darüber erteilen, welche Bediener Trainingsbedarf haben und/oder welche Bediener besonders gut trainiert sind. Auch kann eine derartige Ansicht oder Analyse dazu herangezogen werden, um eine Änderungsempfehlung zu bestimmen. Beispielsweise kann ein besonders stark von einer angenommenen und/oder durchschnittlichen Bedienerverhalten abweichendes Bedienerverhalten als besonders änderungsbedürftig herangezogen werden.

Beispielsweise kann eine vergleichende Analyse wie in Fig. 8 gezeigt noch mit einer Einschätzung einer Schädlichkeit bzw. eines Einflusses einer jeweiligen Bedienerverhaltensabweichung mit einer Energiebedarfsabweichung wie in Fig. 7a,b gezeigt kombiniert werden, um diejenige Bedienerverhaltensabweichung zu ermitteln, welche in besonders hohem Maße dafür verantwortlich ist, dass ein tatsächlicher Energiebedarf von einem prognostizierten Energiebedarf abweicht. Eine Änderungsempfehlung kann darauf abzielen, dieser Bedienerverhaltensabweichung entgegenzuwirken. Entsprechende Analysen können automatisiert, z.B. basierend auf jeweiligen Korrelationskoeffizienten und/oder Signifikanzanalysen, durchgeführt werden.

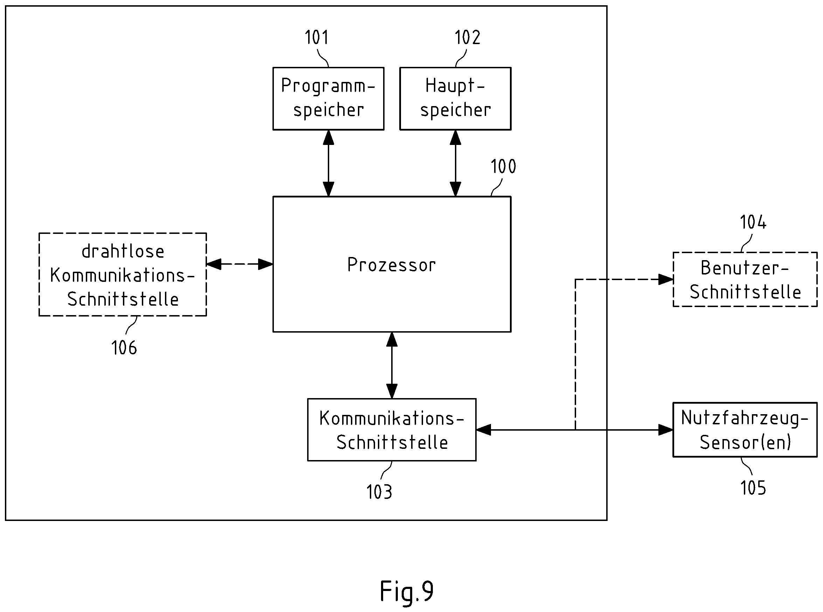

Fig. 9 zeigt eine schematische Darstellung einer Ausführungsform einer Vorrichtung gemäß der Erfindung, beispielsweise gemäß dem dritten Aspekt. Beispielsweise kann die Vorrichtung Teil eines Straßennutzfahrzeugs, z.B. in Form eines Nutzfahrzeuganhängers, und/oder einer Transportkältemaschine sein. Zum Beispiel kann die Vorrichtung eine Steuereinheit und/oder Telematikeinheit des Nutzfahrzeuganhängers sein.

Die Vorrichtung umfasst einen Prozessor 100 und verbunden mit dem Prozessor 100 einen ersten Speicher als Programmspeicher 101, einen zweiten Speicher als Hauptspeicher 102 und eine Kommunikationsschnittstelle 103.

Unter einem Prozessor soll beispielsweise ein Mikroprozessor (Engl. Central Processing Unit, CPU), eine Mikrokontrolleinheit, ein Mikrocontroller, ein digitaler Signalprozessor (DSP), eine Anwendungsspezifische Integrierte Schaltung (ASIC), ein Field Programmable Gate Array (FPGA), oder ein graphischer Prozessor (Engl: Graphics Processing Unit, GPU) verstanden werden. Es versteht sich, dass die Vorrichtung 1 auch mehrere Prozessoren 100 umfassen kann.

Der Prozessor 100 führt Programmanweisungen aus, die in Programmspeicher 101 gespeichert sind, und speichert beispielsweise Zwischenergebnisse oder Ähnliches in Hauptspeicher 102.

In dem Programmspeicher 101 sind beispielsweise Programmanweisungen gespeichert, die den Prozessor 100, wenn er die Programmanweisungen ausführt, veranlassen, das Verfahren gemäß der Erfindung (z.B. das Verfahren gemäß dem in Fig. 4 dargestellten Flussdiagramm) zumindest teilweise auszuführen und/oder zu steuern.

Der Programmspeicher 101 enthält ferner beispielsweise das Betriebssystem der Vorrichtung, das beim Starten der Vorrichtung 1 zumindest teilweise in Hauptspeicher 102 geladen und vom Prozessor 100 ausgeführt wird. Insbesondere wird beim Starten der Vorrichtung zumindest ein Teil des Kerns des Betriebssystems in den Hauptspeicher 102 geladen und von Prozessor 100 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Hauptspeicher 102 und der Programmspeicher 101 können auch als ein Speicher ausgebildet sein. Alternativ können der Hauptspeicher 102 und/oder der Programmspeicher 101 jeweils durch mehrere Speicher gebildet werden. Ferner können der Hauptspeicher 102 und/oder der Programmspeicher 101 auch Teil des Prozessors 100 sein.

Der Prozessor 100 steuert die Kommunikationsschnittstelle 103, welche beispielsweise eingerichtet ist, Informationen mit anderen Komponenten des Nutzfahrzeuganhängers auszutauschen (z.B. zu senden und/oder zu empfangen). Die Kommunikationsschnittstelle 103 ist beispielsweise als Ethernet-, CAN-, K-Leitungs-, LIN- oder Flexray-Schnittstelle ausgebildet. Sie ist beispielsweise eingerichtet zur drahtgebundenen Kommunikation mit der optionalen Benutzerschnittstelle 104 und/oder einem oder mehreren Sensoren 105 des Nutzfahrzeuganhängers über ein Ethernet-Netzwerk oder ein CAN-, K-Leitungs-, LIN- oder Flexray-Bussystem des Nutzfahrzeuganhängers. Zum Beispiel kann die Vorrichtung durch die Kommunikationsschnittstelle 103 Informationen an die Benutzerschnittstelle 104 und/oder Sensoren 105 senden und/oder von diesen empfangen. Ethernet ist zum Beispiel in den Standards der IEEE-802.3-Familie spezifiziert. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In Fig. 9 sind die Benutzerschnittstelle 104 und die Sensoren 105 nicht als Teil der Vorrichtung dargestellt. Es versteht sich jedoch, dass die Benutzerschnittstelle 104 und/oder die Sensoren 105 auch vollständig oder teilweise Teil der Vorrichtung sein kann/können, insbesondere dann, wenn die Vorrichtung der Nutzfahrzeuganhänger ist sowie die Benutzerschnittstelle 104 und/oder die Sensoren 105 Teil des Nutzfahrzeuganhängers ist/sind.

Eine Benutzerschnittstelle 104 ist beispielsweise eingerichtet, eine Information in Form einer Benutzereingabe zu erfassen und/oder eine Information an einen Benutzer auszugeben, zum Beispiel eine Änderungsempfehlung. Zum Beispiel umfasst die Benutzerschnittstelle 104 eine Tastatur, ein Bildschirm, ein berührungsempfindlicher Bildschirm, ein Lautsprecher, eine Hupe und/oder ein Mikrofon. Die Benutzerschnittstelle 104 ist beispielsweise Teil des Nutzfahrzeuganhängers oder eines mit dem Nutzfahrzeuganhänger gekoppelten Zugfahrzeugs.

Die Nutzfahrzeugsensoren 105 können zumindest teilweise Teil des Nutzfahrzeuganhängers und/oder Teil eines mit dem Nutzfahrzeuganhänger gekoppelten Zugfahrzeugs sein.

Ferner weist die Vorrichtung eine durch den Prozessor 100 gesteuerte optionale drahtlose Kommunikationsschnittstelle 106 auf, über welche Informationen über einen drahtlosen Kommunikationspfad mit einer entfernten Vorrichtung ausgetauscht (z.B. gesendet und/oder empfangen werden können. Die drahtlose Kommunikationsschnittstelle 106 ist beispielsweise als Bluetooth-, WLAN-, und/oder Mobilfunk-Kommunikationsschnittstelle ausgebildet. Die Bluetooth-Spezifikationen sind derzeit im Internet unter www.bluetooth.org erhältlich. WLAN ist in den Standards der IEEE 802.11-Familie standardisiert, die derzeit im Internet unter https://www.ieee.org abgerufen werden können. Unter Mobilfunk sollen insbesondere Mobilfunkkommunikationssysteme wie ein 2G/3G/4G/5G/6G-Kommunikationssystem verstanden werden. Die Spezifikationen der 2G, 3G, 4G, 5G oder 6G Mobilfunkkommunikationssysteme werden derzeit durch das 3rd Generation Partnership Project (3GPP) entwickelt und können im Internet unter https://www.3gpp.org/ abgerufen werden.

Die Komponenten 100 bis 103 und 106 der Vorrichtung sind beispielsweise über eines oder mehrere Bussysteme (z.B. ein oder mehrere serielle und/oder parallele Busverbindungen) kommunikativ und/oder operativ miteinander verbunden.

Es versteht sich, dass die Vorrichtung neben den dargestellten Komponenten weitere Komponenten umfassen kann.

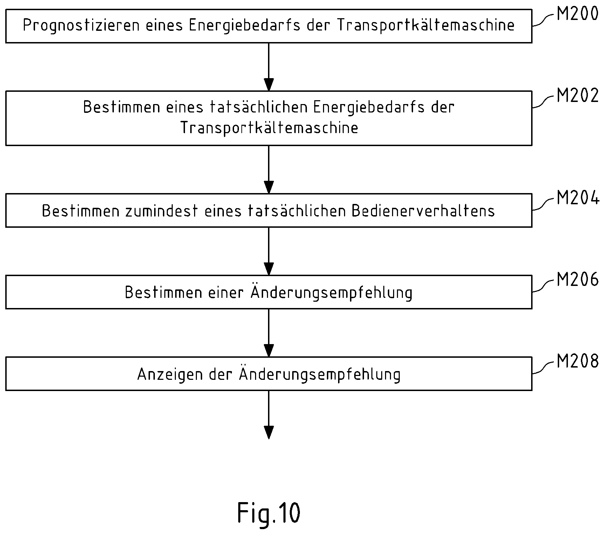

Fig. 10 zeigt ein Flussdiagramm eines Verfahrens gemäß der Erfindung, beispielsweise gemäß dem zweiten Aspekt und/oder ausgeführt von einer Vorrichtung gemäß dem dritten Aspekt und/oder zum Betreiben eines Straßennutzfahrzeugs gemäß dem ersten Aspekt.

In einem Schritt M200 wird ein Energiebedarf einer Transportkältemaschine des Straßennutzfahrzeugs für zumindest eine erste zu befahrende Strecke prognostiziert. Die Prognose basiert zumindest teilweise auf zumindest einem angenommenen Bedienerverhalten. Beispielsweise kann die Prognose auf weiteren Faktoren basieren wie z.B. auf einer Route, Optimierungskriterien, Wetter und/oder Kombinationen hieraus. Beispielsweise kann vorangehendes Fahrverhalten (z.B. eines Bedieners, z.B. desjenigen Bedieners, welcher die zumindest eine erste Strecke zu befahren hat) bei einer Prognose des Energiebedarfs berücksichtig werden.

In einem weiteren Schritt M202 wird ein tatsächlicher Energiebedarf bestimmt, beispielsweise basierend auf Messungen während Befahren der zumindest einen ersten Strecke.

Gemäß Schritt M204 wird ein tatsächliches Bedienerverhalten für die zumindest eine erste zu befahrende Strecke bestimmt. Zum Beispiel kann auch diese Bestimmung auf zumindest einer Messung basierend, z.B. auf einem GPS, Stromsensoren und/oder Kombinationen hieraus.

Schritte M200, M202 und M204 können beispielsweise für mehrere zumindest eine erste Strecken wiederholt werden, beispielsweise für einen oder mehrere voneinander verschiedene Bediener.

In Schritt M206 wird eine Änderungsempfehlung bestimmt. Dies kann beispielsweise basieren auf einer Abweichung zwischen prognostiziertem Energiebedarf und tatsächlichem Energiebedarf (Energiebedarfsabweichung) und auf zumindest einer Abweichung zwischen zumindest einem angenommenem Bedienerverhalten und zumindest einem tatsächlichen Bedienerverhalten (Bedienerverhaltensabweichung). Z.B. kann bestimmt werden, welches Bedienerverhalten (z.B. wahrscheinlicherweise) zu einer Energiebedarfsabweichung geführt hat. (z.B. Tür zu lange geöffnet gelassen) Eine Änderungsempfehlung kann auf eine darauf gerichtet sein, das Bedienerverhalten in eine gewünschte Richtung zu ändern (z.B. Änderungsempfehlung: Türen zum Laderaum bitte umgehend schließen.).

Schritt M208 zielt auf ein Anzeigen der Änderungsempfehlung ab. Beispielsweise kann die Änderungsempfehlung dem Bediener visuell, akustisch oder haptisch angezeigt werden. Da der Bediener eine trainierter Fachkraft ist, setzt er die Änderung um. In der Folge sinkt der Energiebedarf der Transportkältemaschine.

Die Schritte M200, M202, M204, M206 und M208 können in der in Fig. 10 dargestellten Reihenfolge oder in einer beliebigen anderen Reihenfolge erfolgen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Schritte in den einzelnen Flussdiagrammen ist nicht zwingend, alternative Abfolgen der Schritte sind denkbar - soweit nicht anders angegeben. Die Schritte können auf verschiedene Art und Weise implementiert werden, so ist eine Implementierung in Software (durch Programmanweisungen), Hardware oder eine Kombination von beidem zur Implementierung der Schritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Komponente kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

**Patentansprüche**

1. Straßennutzfahrzeug (1) umfassend eine Transportkältemaschine (2), wobei das Straßennutzfahrzeug dazu eingerichtet ist,

   - einen Energiebedarf der Transportkältemaschine (2) für zumindest eine erste zu befahrende Strecke zu prognostizieren, wobei der prognostizierte Energiebedarf zumindest teilweise auf zumindest einem angenommenen Bedienerverhalten basiert,
   - einen tatsächlichen Energiebedarf der Transportkältemaschine (2) für die zumindest eine erste zu befahrende Strecke zu bestimmen,
   - zumindest ein tatsächliches Bedienerverhalten für die zumindest eine erste zu befahrende Strecke zu bestimmen,
   - basierend auf einer Energiebedarfsabweichung zwischen dem prognostizierten Energiebedarf und dem tatsächlichen Energiebedarf und auf zumindest einer Bedienerverhaltensabweichung zwischen zumindest einem angenommenem Bedienerverhalten und zumindest einem tatsächlichen Bedienerverhalten eine Änderungsempfehlung zumindest eines Bedienerverhalten zu bestimmen, und
   - einem Bediener die Änderungsempfehlung bei oder vor Befahren einer zweiten zu befahrenden Strecke anzuzeigen.

2. Straßennutzfahrzeug (1) gemäß Anspruch 1, wobei der Energiebedarf prognostiziert wird basierend auf vergangenen tatsächlichen Energiebedarfen und/oder Energiebedarfsabweichungen und/oder vergangenen tatsächlichen Bedienerverhalten und/oder Bedienerverhaltensabweichungen.

3. Straßennutzfahrzeug (1) gemäß Anspruch 1 oder 2, wobei das Straßennutzfahrzeug (1) ferner dazu eingerichtet ist, das Prognostizieren eines Energiebedarfs der Transportkältemaschine (2), das Bestimmen eines tatsächlichen Energiebedarfs der Transportkältemaschine (2) und das Bestimmen zumindest eines tatsächlichen Bedienerverhaltens zumindest einmal zu wiederholen, wobei insbesondere ferner das Bestimmen der Änderungsempfehlung basiert auf einer Mehrzahl von durch die zumindest eine Wiederholung resultierenden Energiebedarfsabweichungen und/oder Bedienerverhaltensabweichungen.

4. Straßennutzfahrzeug (1) gemäß einem der Ansprüche 1 bis 3, wobei der Energiebedarf prognostiziert wird basierend auf einer Prognose eines Energieverbrauchs und einer Prognose einer Energiegewinnung.

5. Straßennutzfahrzeug (1) gemäß einem der Ansprüche 1 bis 4,

   - wobei der Energiebedarf, insbesondere der Energieverbrauch, prognostiziert wird zumindest teilweise basierend auf Nutzerdaten, wobei die Nutzerdaten insbesondere zumindest eines der Folgenden umfassen:

     - Routeninformationen zu der zumindest einen ersten zu befahrenden Strecke, insbesondere Informationen zu einem Startpunkt und/oder einem Endpunkt, Informationen zu zumindest einem Koordinatenverlauf der zumindest einen ersten zu befahrenden Strecke,
     - zumindest einem Zwischenstopp,
     - zumindest einem Temperatur-Setpoint, insbesondere einer zulässigen Abweichungen von dem Temperatur-Setpoint,
     - zumindest einer Art und/oder einem Wert einer zu transportierenden Ware, und/oder
     - zumindest einem Optimierungsziel, insbesondere eines von Energie-Effizienz, $CO_2$-Einsparung, Wirtschaftlichkeit, Laufzeit, Temperaturführung, und/oder Bauteilverschleiß, und/oder

   - wobei der Energiebedarf, insbesondere der Energieverbrauch, prognostiziert wird zumindest teilweise basierend auf Telematikdaten, wobei die Telematikdaten insbesondere zumindest eines der folgenden umfassen:

     - zumindest einer Ist-Temperaturen zumindest eines Teils eines Laderaums des Straßennutzfahrzeugs,
     - zumindest einer Setpoint zumindest eines Teils eines Laderaums des Straßennutzfahrzeugs,

- zumindest einem Türstatus des Straßennutzfahrzeugs,
- zumindest einem Generator Modus des Straßennutzfahrzeugs,
- zumindest einer Achslast des Straßennutzfahrzeugs, und/oder
- zumindest einer Isolationsgüte zumindest eines Laderaums des Straßennutzfahrzeugs und/oder

- wobei der Energiebedarf, insbesondere der Energieverbrauch, prognostiziert wird zumindest teilweise basierend auf einem der Folgenden :

- zumindest einem Wetterdatum, insbesondere zumindest einem von Temperatur, Luftfeuchtigkeit, Sonneneinstrahlung und/oder astronomischer Luftmasse, zu der zumindest einen ersten zu befahrenden Strecke, und/oder
- zumindest einer Verkehrsinformation, insbesondere zumindest einem von Geschwindigkeit und/oder zumindest einem Haltepunkt der zumindest einen ersten zu befahrenden Strecke.

6. Straßennutzfahrzeug (1) gemäß einem der Ansprüche 1 bis 5, wobei der Energiebedarf, insbesondere die Energiegewinnung, prognostiziert wird basierend auf zumindest einem der Folgenden

- zumindest einen Ladezustand eines Energiespeichers, insbesondere eines Hochvolt-Energiespeichers, des Straßennutzfahrzeugs,
- zumindest eine Temperatur eines Energiespeichers, insbesondere eines Hochvolt-Energiespeichers, des Straßennutzfahrzeugs,
- einer Rekuperationsenergieprädiktion, insbesondere wobei die Rekuperationsenergieprädiktion basierend auf Topografie- und/oder Verkehrsinformationen zu der zu zumindest einen ersten zu befahrenden ersten Strecke bestimmt wird,
- einer Solarenergieprädiktion, insbesondere wobei die Solarenergieprädiktion basierend auf Wetter- und/oder Topografieinformationen zu der zu zumindest einen ersten zu befahrenden ersten Strecke bestimmt wird,
- einer Ladeenergieprädiktion, insbesondere wobei die Ladeenergieprädiktion basierend auf einer Infrastruktur und/oder Standzeit während der zumindest einen ersten zu befahrenden ersten Strecke bestimmt wird,
- einer Zugfahrzeugenergieprädiktion, und/oder
- zumindest eines Strompreises.

7. Straßennutzfahrzeug (1) gemäß einem der Ansprüche 1 bis 6, wobei das angenommene Bedienerverhalten zumindest eines der folgenden umfasst:

- Anschluss des Straßennutzfahrzeugs an eine Energieversorgungsinfrastruktur,
- Türöffnungsverhalten zumindest einer Tür zu einem Laderaum des Straßennutzfahrzeugs, insbesondere Dauer und/oder Häufigkeit von Türöffnungen,
- Einhaltung einer vorgegebenen Strecke,
- Einhaltung eines vorgesehenen Stopps,
- Einhaltung einer vorgesehenen Abfahrtszeit,
- Vorkühlen einer Warenladung des Straßennutzfahrzeugs, und/oder
- Vorladung zumindest eines Energiespeichers.

8. Straßennutzfahrzeug (1) gemäß einem der Ansprüche 1 bis 7, wobei der tatsächliche Energiebedarf am Ende der zurückzulegenden Strecke und/oder während eines Zurücklegens der zurückzulegenden Strecke gemessen wird, insbesondere mittels zumindest eines Sensors und/oder durch die Transportkältemaschine.

9. Straßennutzfahrzeug (1) gemäß einem der Ansprüche 1 bis 8, wobei das tatsächliche Bedienerverhalten während eines Zurücklegens der zurückzulegenden Strecke erfasst wird, insbesondere mittels zumindest eines Sensors.

10. Straßennutzfahrzeug (1) gemäß einem der Ansprüche 1 bis 9, wobei die Bestimmung zumindest einer Änderungsempfehlung zumindest eines Bedienerverhalten basiert auf

- einer Korrelation zwischen zumindest einer der zumindest einen Bedienerverhaltensabweichung und der Energiebedarfsabweichung, insbesondere basierend auf einer Vielzahl von ersten zu befahrenden Strecken.

11. Straßennutzfahrzeug (1) gemäß einem der Ansprüche 1 bis 10, wobei das Straßennutzfahrzeug (1) ferner eingerichtet ist, zumindest ein Energieeinsparungspotential zumindest einer Änderungsempfehlung zu bestimmen.

12. Straßennutzfahrzeug (1) gemäß einem der Ansprüche 1 bis 11, wobei die Änderungsempfehlung mittels eines Anzeigemittels des Straßennutzfahrzeug (1) oder mittels eines Anzeigemittels eines mit dem Straßennutzfahrzeug verbundenen weiteren Fahrzeug angezeigt wird.

13. Straßennutzfahrzeug (1) gemäß einem der Ansprüche 1 bis 12, wobei das Straßennutzfahrzeug (1) ferner eingerichtet ist eine bedienerverhaltensunabhängige Energiebedarfsabweichung zu bestimmen, insbesondere wobei das Straßennutzfahrzeug (1) ferner eingerichtet ist, basierend auf der bedienerverhaltensunabhängige Energiebedarfsabweichung eine Wartungsempfehlung zu bestimmen und anzuzeigen, insbesondere zumindest eines des Folgenden:

- Prüfung einer Isolation des Straßennutzfahrzeugs (1),
- Reinigung eines Generator der Transportkältemaschine (2),
- Reinigung eines Solardachs des Straßennutzfahrzeugs (1), und/oder
- Verbindung des Straßennutzfahrzeugs (1) mit einem Stromnetz.

14. Verfahren zum Betreiben eines Straßennutzfahrzeugs (1) umfassend eine Transportkältemaschine (2), insbesondere nach einem der Ansprüche 1 bis 13, umfassend

- Prognostizieren eines Energiebedarfs der Transportkältemaschine (2) für zumindest eine erste zu befahrende Strecke zu, wobei der prognostizierte Energiebedarf zumindest teilweise auf zumindest einem angenommenen Bedienerverhalten basiert,
- Bestimmen eines tatsächlichen Energiebedarfs der Transportkältemaschine (2) für die zumindest eine erste zu befahrende Strecke zu,
- Bestimmen zumindest eines tatsächlichen Bedienerverhaltens für die zumindest eine erste zu befahrende Strecke,
- Bestimmen, basierend auf einer Energiebedarfsabweichung zwischen dem prognostizierten Energiebedarf und dem tatsächlichen Energiebedarf und auf zumindest einer Bedienerverhaltensabweichung zwischen zumindest einem angenommenem Bedienerverhalten und zumindest einem tatsächlichen Bedienerverhalten, einer Änderungsempfehlung zumindest eines Bedienerverhaltens, und
- Anzeigen, einem Bediener, der Änderungsempfehlung bei oder vor Befahren einer zweiten zu befahrenden Strecke.

15. Vorrichtung umfassend Mittel eingerichtet zum Steuern und/oder Ausführen eines Verfahrens nach Anspruch 14.

Fig.1

EP 4 711 160 A1

Fig.2

Fig.3a

EP 4 711 160 A1

Fig.3b

EP 4 711 160 A1

```
   M102                      M104                       M106

┌─────────────────────┐ ┌─────────────────────────┐ ┌─────────────────────────┐
│ Userdaten (vom Kunden)│ │Telematikdaten (vom Fahrzeug)│ │ Onlinedaten (aus Internet)│
├─────────────────────┤ ├─────────────────────────┤ ├─────────────────────────┤
│                     │ │                         │ │                         │
└─────────────────────┘ └─────────────────────────┘ └─────────────────────────┘

          M112
        ┌──────────────────────────────────────────────────────────────┐
        │                    Leistungsprädiktion                        │
        ├──────────────────────────────────────────────────────────────┤
        │                                                               │
        └──────────────────────────────────────────────────────────────┘

            TKM          e-Achse      PV-Anlage                  Zugmaschinen-
        Energieverbrauch  Energie      Energie      CEE Energie    Energie

          M122
        ┌──────────────────────────────────────────────────────────────┐
        │          Optimierung Route und Bedienerverhalten              │
        ├──────────────────────────────────────────────────────────────┤
        │                                                               │
        └──────────────────────────────────────────────────────────────┘

          M132
        ┌──────────────────────────────────────────────────────────────┐
        │                      Postprocessing                           │
        ├──────────────────────────────┬───────────────────────────────┤
        │      Änderungsempfehlung      │      Feedback Optimierung      │
        └──────────────────────────────┴───────────────────────────────┘
```

Fig.4

Fig.5

$$\hat{E}\ (\hat{F})$$

$$\Delta E = E - \hat{E}$$
$$\Delta F = F - \hat{F}$$

$$A = f\ (\Delta E, \Delta F)$$

Fig.6

Fig.7a

Fig.7b

Fig.8

Fig.9

Prognostizieren eines Energiebedarfs der Transportkältemaschine ⌐M200

↓

Bestimmen eines tatsächlichen Energiebedarfs der Transportkältemaschine ⌐M202

↓

Bestimmen zumindest eines tatsächlichen Bedienerverhaltens ⌐M204

↓

Bestimmen einer Änderungsempfehlung ⌐M206

↓

Anzeigen der Änderungsempfehlung ⌐M208

↓

Fig.10

EUROPÄISCHER RECHERCHENBERICHT

Nummer der Anmeldung

EP 24 19 9827

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2023/278392 A1 (MAKWINSKI MARK [US]) 7. September 2023 (2023-09-07) * das ganze Dokument * ----- | 1-15 | INV. B60H1/00 B60H1/32 |
| A | US 2023/311615 A1 (FOLLANSBEE DAVID [US]) 5. Oktober 2023 (2023-10-05) * das ganze Dokument * ----- | 1-15 | |
| A | US 11 993 131 B2 (THERMO KING LLC [US]) 28. Mai 2024 (2024-05-28) * das ganze Dokument * ----- | 1-15 | |
| A | EP 3 906 172 B1 (THERMO KING LLC [US]) 3. April 2024 (2024-04-03) * das ganze Dokument * ----- | 1-15 | |

RECHERCHIERTE SACHGEBIETE (IPC)

B60H

Der vorliegende Recherchenbericht wurde für alle Patentansprüche erstellt

| Recherchenort | Abschlußdatum der Recherche | Prüfer |
|---|---|---|
| München | 12. März 2025 | Beckman, Tycho |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
...................................................................................
& : Mitglied der gleichen Patentfamilie, übereinstimmendes
Dokument

EPO FORM 1503 03.82 (P04C03)

# EP 4 711 160 A1

## ANHANG ZUM EUROPÄISCHEN RECHERCHENBERICHT
## ÜBER DIE EUROPÄISCHE PATENTANMELDUNG NR.

EP 24 19 9827

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-03-2025

| Im Recherchenbericht angeführtes Patentdokument | Datum der Veröffentlichung | Mitglied(er) der Patentfamilie | | Datum der Veröffentlichung |
|---|---|---|---|---|
| US 2023278392 A1 | 07-09-2023 | CN | 116691286 A | 05-09-2023 |
| | | EP | 4238789 A1 | 06-09-2023 |
| | | US | 2023278392 A1 | 07-09-2023 |
| US 2023311615 A1 | 05-10-2023 | CN | 116890594 A | 17-10-2023 |
| | | EP | 4253108 A1 | 04-10-2023 |
| | | US | 2023311615 A1 | 05-10-2023 |
| US 11993131 B2 | 28-05-2024 | EP | 3906174 A1 | 10-11-2021 |
| | | US | 2022080803 A1 | 17-03-2022 |
| | | WO | 2020142065 A1 | 09-07-2020 |
| EP 3906172 B1 | 03-04-2024 | EP | 3906172 A1 | 10-11-2021 |
| | | ES | 2982673 T3 | 17-10-2024 |
| | | US | 2022090924 A1 | 24-03-2022 |
| | | US | 2024418518 A1 | 19-12-2024 |
| | | WO | 2020142061 A1 | 09-07-2020 |

EPO FORM P0461

Für nähere Einzelheiten zu diesem Anhang : siehe Amtsblatt des Europäischen Patentamts, Nr.12/82